# EUROPÄISCHE PATENTANMELDUNG

(11) **EP 2 546 276 A1**
(43) Veröffentlichungstag der Anmeldung: **16.01.2013**
(21) Anmeldenummer: 11174274.8
(22) Anmeldetag: 15.07.2011
(51) Int. Cl.: C08G 59/50, C08G 59/56, C08G 59/62

(54) **Härter für Epoxidharze**

(71) Anmelder: Sika Technology AG, 6340 Baar (CH)
(72) Erfinder: Kramer, Andreas, 8006 Zürich (CH); Kasemi, Edis, 8046 Zürich (CH)
(74) Vertreter: Sika Patent Attorneys

(57) **Zusammenfassung**

Die vorliegende Erfindung betrifft geruchsarme, niedrigviskose Härter für Epoxidharze, enthaltend ein Amin mit mindestens einer Aminogruppe der Formel (I) und ein Amin mit mindestens einer Aminogruppe der Formel (II), wobei die Aminogruppen der Formeln (I) und (II) in einem bestimmten Verhältnis vorliegen.

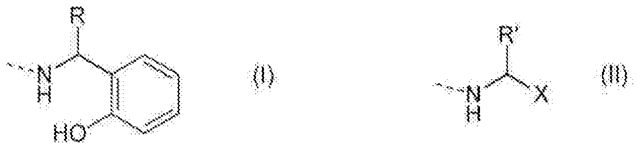

Diese Härter härten mit Epoxidharzen schnell und ohne Blushing zu Filmen von hoher Härte und guter Beständigkeit. Sie sind insbesondere geeignet für emissionsarme Beschichtungen.

## Beschreibung

### Technisches Gebiet

Die Erfindung betrifft das Gebiet der Amine und ihre Verwendung als Härter für Epoxidharze, sowie Amine enthaltende Epoxidharz-Zusammensetzungen und ihre Verwendung, insbesondere als Beschichtung.

### Stand der Technik

Epoxidharz-Zusammensetzungen sollen eine Reihe von Eigenschaften aufweisen, um als Beschichtung von hoher Qualität verwendbar zu sein. Einerseits sollen sie eine niedrige Viskosität aufweisen, damit sie bei Umgebungstemperatur gut verarbeitbar und selbstverlaufend sind, und sie sollen ohne sogenannte Blushing-Effekte schnell aushärten, auch bei feucht-kalten Bedingungen. Als "Blushing" werden Mängel bei der Aushärtung wie Trübungen, Flecken und raue oder klebrige Oberfläche bezeichnet, verursacht durch Salzbildung von Aminen mit Kohlendioxid (CO₂) aus der Luft, wobei eine hohe Luftfeuchtigkeit und tiefe Temperaturen Blushing-Effekte begünstigen. Im ausgehärteten Zustand soll die Epoxidharz-Beschichtung eine ebenmässige Oberfläche ohne Trübungen, Flecken oder Krater aufweisen, und sie soll eine hohe Härte und gute Beständigkeit besitzen. Um diese Eigenschaften zu erreichen, werden in Epoxidharz-Beschichtungen nach dem Stand der Technik üblicherweise Verdünner eingesetzt. Solche Verdünner, wie Benzylalkohol oder Phenole, verbessern zwar die Verarbeitbarkeit, werden bei der Aushärtung aber nicht in die Harzmatrix eingebaut. Immer wichtiger wird heutzutage aber die Forderung nach emissionsarmen Systemen, die nach der Aushärtung einen geringen Gehalt von durch Verdampfungs- oder Diffusionsprozesse freisetzbaren Substanzen aufweisen. Für emissionsarme Systeme können nicht einbaubare Verdünner deshalb nur in sehr geringer Menge oder gar nicht verwendet werden. Eine weitere Möglichkeit, Epoxidharz-Zusammensetzungen zu verdünnen, ist die Zugabe von niedrigmolekularen Aminen wie beispielsweise Isophorondiamin, Xylylendiamin oder Dimethylaminopropylamin. Solche niedrigmolekulare Amine sind aber meist geruchsintensiv und stark hautreizend und führen bei feucht-kalten Bedingungen zu Blushing-Effekten.

US 2009/0163676 beschreibt Härter-Zusammensetzungen enthaltend mindestens ein benzyliertes Polyalkylenpolyamin und mindestens ein weiteres Amin. Ohne Adduktierung mit Epoxiden härten diese Härter mit Epoxidharzen vor allem in der Kälte nur langsam aus. Eine teilweise Adduktierung an Epoxide bewirkt zwar eine schnellere Aushärtung, die Viskosität der Härter wird dabei aber stark erhöht.

US 4'129'556 beschreibt Epoxidharz-Zusammensetzungen enthaltend zweifach hydroxybenzylierte Diamine als Härter, welche bei Raumtemperatur bevorzugt fest sind. US 4'399'268 beschreibt einen Prozess zur Herstellung von Epoxidharz-Formteilen oder -Beschichtungen, wobei als Härter einfach hydroxybenzylierte Diamine verwendet werden.

Aus dem Stand der Technik ist bekannt, dass Phenolgruppen eine beschleunigende Wirkung auf die Aushärtung von Aminen mit Epoxiden haben. Phenol und Alkylphenole sind geruchsintensiv, toxisch und deshalb in Zusammensetzungen nicht erwünscht, und mit Phenolgruppen-haltigen nicht einbaubaren Verdünnern können keine emissionsarmen Systeme formuliert werden. Mannich-Basen wiederum sind hochviskos und enthalten oft Spuren von freiem Phenol, und die aus dem Stand der Technik bekannten hydroxybenzylierten Polyamine weisen so hohe Viskositäten auf, dass sie ohne zusätzliche Verdünnung für Beschichtungsanwendungen nicht geeignet sind.

### Darstellung der Erfindung

Aufgabe der vorliegenden Erfindung ist es daher, Härter für Epoxidharze zur Verfügung zu stellen, die geruchsarm und niedrigviskos sind, mit Epoxidharzen auch ohne Anwesenheit von nicht einbaubaren Verdünnern einfach verarbeitbar und gut verträglich sind und auch bei feucht-kalten Bedingungen schnell und ohne Blushing aushärten.

Überraschenderweise wurde gefunden, dass der Härter nach Anspruch 1 enthaltend ein Amin mit mindestens einer Aminogruppe der Formel (I) und ein Amin mit mindestens einer Aminogruppe der Formel (II) im beschriebenen Verhältnis der Aminogruppen diese Aufgabe löst. Der Härter ist geruchsarm, wenig flüchtig und überraschend niedrigviskos. Er lässt sich leicht mit Epoxidharzen vermischen und ermöglicht im vermischten Zustand ebenfalls eine niedrige Viskosität. Mit Epoxidharzen verträgt er sich ausgezeichnet und härtet sie überraschend schnell aus, insbesondere auch bei feucht-kalten Bedingungen. Dabei entstehen Filme, die nicht klebrig sind, einen hohen Glanz aufweisen, frei sind von Trübungen und Oberflächenstörungen und eine hohe Härte und eine gute Beständigkeit besitzen. Besonders überraschend ist die Tatsache, dass der Härter im Vergleich zu Härtern ohne Aminogruppen der Formel (I) eine nur geringfügig erhöhte Viskosität aufweist, aber besonders in der Kälte viel schneller mit Epoxidharzen aushärtet als jene. Die guten Eigenschaften von Phenolgruppen konnten in Epoxidharz-Systemen nach dem Stand der Technik aber bisher nur unter Inkaufnahme der genannten Nachteile genutzt werden. Mit Härtern nach Anspruch 1 sind emissionsarme Epoxidharz-Systeme zugänglich, welche die Bedingungen für Öko-Gütesiegel, beispielsweise nach Emicode (EC1 Plus), AgBB, DIBt, Der Blaue Engel, AFSSET, RTS (M1) und US Green Building Council (LEED), erfüllen und gleichzeitig hohen Ansprüchen bezüglich Verarbeitungs- und Gebrauchseigenschaften genügen, was mit Härtern aus dem Stand der Technik nicht gelingt. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Härter, geeignet zum Aushärten von Epoxidharzen, enthaltend ein Amin mit mindestens einer Aminogruppe der Formel (I) und ein Amin mit mindestens einer Aminogruppe der Formel (II), 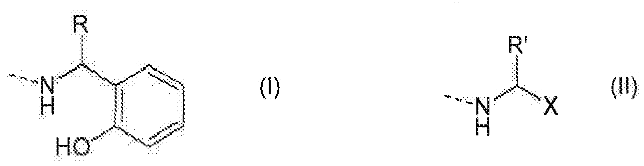 wobei
R und R' unabhängig voneinander für ein Wasserstoffatom oder eine Alkylgruppe mit 1 bis 12 C-Atomen stehen; und
X für einen Kohlenwasserstoffrest mit 1 bis 20 C-Atomen, welcher gegebenenfalls Hydroxylgruppen, Ethergruppen, Estergruppen oder Aminogruppen aufweist, steht;
und wobei das Verhältnis **V1** zwischen der Anzahl Aminogruppen der Formel (I) und der Anzahl Aminogruppen der Formel (II) im Härter einen Wert von 0.05 bis 1.0 aufweist.

Die gestrichelten Linien in den Formeln in diesem Dokument stellen jeweils die Bindung zwischen einem Substituenten und dem zugehörigen Molekülrest dar

Mit "Poly" beginnende Substanznamen wie Polyamin, Polyol oder Polyepoxid bezeichnen Substanzen, die formal zwei oder mehr der in ihrem Namen vorkommenden funktionellen Gruppen pro Molekül enthalten.

Als "aliphatisch" wird ein Amin bezeichnet, dessen Aminogruppen an aliphatische, cycloaliphatische oder arylaliphatische Reste gebunden sind; entsprechend werden diese Gruppen als aliphatische Aminogruppen bezeichnet. Als "aromatisch" wird ein Amin bezeichnet, dessen Aminogruppen an einen aromatischen Rest gebunden sind; entsprechend werden diese Gruppen als aromatische Aminogruppen bezeichnet.

Als "Aminwasserstoff" werden die Wasserstoffatome von primären und sekundären Aminogruppen bezeichnet.

Als "nicht einbaubarer Verdünner" wird eine in einem Epoxidharz lösliche und dessen Viskosität senkende Substanz bezeichnet, welche bei der Aushärtung des Epoxidharzes nicht kovalent in die Harzmatrix eingebaut wird.

Mit dem Begriff "Viskosität" wird im vorliegenden Dokument die dynamische Viskosität oder Scherviskosität bezeichnet, welche durch das Verhältnis zwischen der Schubspannung und der Scherrate (Geschwindigkeitsgefälle) definiert ist und wie in DIN EN ISO 3219 beschrieben bestimmt wird.

Bevorzugt weist das Verhältnis **V1** zwischen der Anzahl Aminogruppen der Formel (I) und der Anzahl Aminogruppen der Formel (II) einen Wert von 0.08 bis 0.7, besonders bevorzugt 0.1 bis 0.5, auf.

Im bevorzugten Verhältnis weist der Härter eine vorteilhafte Kombination aus niedriger Viskosität und schneller Aushärtung mit Epoxidharzen auf.

Bevorzugt stehen R und R' unabhängig voneinander für ein Wasserstoffatom oder eine Methylgruppe, insbesondere für ein Wasserstoffatom.

Diese Amine weisen besonders niedrige Viskositäten auf.

Bevorzugt steht X für einen Kohlenwasserstoffrest mit 1 bis 12 C-Atomen, welcher gegebenenfalls Hydroxylgruppen, Ethergruppen oder Aminogruppen aufweist.

In einer besonders bevorzugten Ausführungsform steht X für Methyl, Ethyl, Propyl, Isopropyl, Isobutyl, Pentyl, Isopentyl, Hexyl, Cyclohexyl, Hept-3-yl, Nonyl, Undecyl, Phenyl, ein isomeres Toluyl, ein isomeres Dimethylphenyl, ein isomeres Trimethylphenyl oder ein isomeres Naphthyl. Diese Amine weisen besonders niedrige Viskositäten auf.

Ganz besonders bevorzugt steht X für einen Kohlenwasserstoffrest in Form eines gegebenenfalls substituierten Arylrests mit 5 bis 12 C-Atomen, insbesondere für Phenyl, die isomeren Toluyle, die isomeren Dimethylphenyle, die isomeren Trimethylphenyle und die isomeren Naphthyle. Diese Amine weisen besonders niedrige Viskositäten auf und sind zudem besonders gut verträglich mit Epoxidharzen, wodurch damit ausgehärtete Filme von besonderes hoher Qualität erhalten werden.

Am meisten bevorzugt steht X für Phenyl. Amine mit Benzylaminogruppen als Aminogruppen der Formel (II) weisen eine ganz besonders niedrige Viskosität auf und härten mit Epoxidharzen zu Filmen von sehr hoher Qualität bezüglich Klarheit, Glanz, Härte und Nichtklebrigkeit.

In einer Ausführungsform steht X für einen Rest der Formel (III), 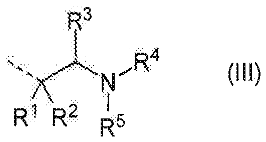 wobei
R¹ und R² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, carbocyclischen
Rings mit 5 bis 8, bevorzugt 6, C-Atomen ist, stehen;
R³ für Wasserstoff oder eine Alkylgruppe oder eine Arylalkylgruppe oder eine Alkoxycarbonylgruppe mit 1 bis 12 C-Atomen steht;
und entweder
R⁴ für einen einwertigen aliphatischen, cycloaliphatischen oder arylaliphatischen Rest mit 1 bis 20 C-Atomen, welcher gegebenenfalls Heteroatome enthält, steht, und
R⁵ für Wasserstoff oder für einen einwertigen aliphatischen, cycloaliphatischen oder arylaliphatischen Rest mit 1 bis 20 C-Atomen, welcher gegebenenfalls Heteroatome enthält, steht,
oder
R⁴ und R⁵ zusammen für einen zweiwertigen aliphatischen Rest mit 3 bis 30 C-Atomen, der Teil eines, gegebenenfalls substituierten, heterocyclischen Rings mit 5 bis 8, bevorzugt 6, Ringatomen ist, wobei dieser Ring neben dem Stickstoffatom gegebenenfalls weitere Heteroatome enthält, stehen.

Bevorzugt stehen R¹ und R² jeweils für eine Methylgruppe.

Bevorzugt steht R³ für ein Wasserstoffatom.

Bevorzugt stehen R⁴ für Methyl, Ethyl, Propyl, Isopropyl, Butyl, 2-Ethylhexyl, Cyclohexyl, 2-Hydroxyethyl, 2-Methoxyethyl, 2-Hydroxypropyl oder Benzyl; und R⁵ für ein Wasserstoffatom oder für Methyl, Ethyl, Propyl, Isopropyl, Butyl, 2-Ethylhexyl, Cyclohexyl, 2-Hydroxyethyl, 2-Methoxyethyl, 2-Hydroxypropyl oder Benzyl.

Weiterhin bevorzugt bilden R⁴ und R⁵ unter Einbezug des Stickstoffatoms einen gegebenenfalls substituierten Morpholinring.

Solche Aminogruppen der Formel (II) enthaltende Härter sind gut verträglich mit Epoxidharzen, insbesondere wenn sie Morpholinogruppen enthalten. Bevorzugt weist der Rest der Formel (III) nicht mehr als 12 C-Atome auf.

In einer weiteren Ausführungsform steht X für einen Rest der Formel (IV), 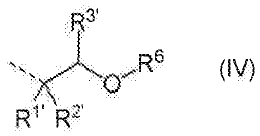 wobei
R^{1'} für R¹, R^{2'} für R² und R^{3'} für R³ stehen, wobei R¹, R² und R³ die bereits genannten Bedeutungen aufweisen, und
R⁶ für Wasserstoff oder für einen Alkyl- oder Acylrest mit 1 bis 20 C-Atomen steht, insbesondere für Wasserstoff oder für einen Acylrest mit 1 bis 12 C-Atomen.

Bevorzugt steht R⁶ für Wasserstoff, Methyl, Ethyl, Propyl, Butyl, Formyl, Acetyl, Propionyl, Butanoyl, Isobutanoyl, Pentanoyl, Hexanoyl, Cyclohexanoyl, 2-Ethylhexanoyl, Octanoyl, Decanoyl, Dodecanoyl oder Benzoyl, besonders bevorzugt für Wasserstoff oder für Dodecanoyl.

Solche Aminogruppen der Formel (II) enthaltende Härter sind gut verträglich mit Epoxidharzen, insbesondere wenn sie als R⁶ Wasserstoff aufweisen. Mit Dodecanoyl als R⁶ sind besonders niedrigviskose Amine zugänglich.

Bevorzugt weist der Rest der Formel (IV) nicht mehr als 12 C-Atome auf. Bevorzugt enthält der Rest der Formel (IV) Hydroxylgruppen oder Ethergruppen.

Die im beschriebenen Härter enthaltenen Amine mit Aminogruppen der Formeln (I) beziehungsweise (II) tragen bevorzugt jeweils 1 bis 3, insbesondere 2, dieser Aminogruppen.

Der beschriebene Härter kann Amine mitAminogruppen der Formel (II) mit verschiedenen Resten X enthalten, insbesondere mit verschiedenen der als bevorzugt genannten Reste X.

Die im beschriebenen Härter enthaltenen Amine mit Aminogruppen der Formeln (I) beziehungsweise (II) stellen bevorzugt keine Amin-Epoxid-Addukte dar.

Der beschriebene Härter enthält in einer bevorzugten Ausführungsform mindestens ein Amin der Formel (V), 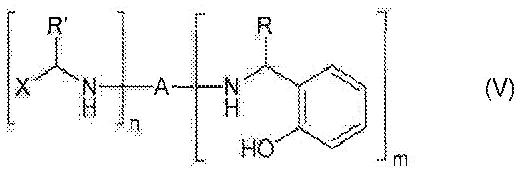 wobei
A für einen (m+n)-wertigen Kohlenwasserstoffrest mit einem Molekulargewicht im Bereich von 28 bis 5000 g/mol, welcher gegebenenfalls Ethergruppen oder Aminogruppen aufweist, steht;
m und n jeweils für 1 oder 2 stehen; und
R, R' und X die genannten Bedeutungen aufweisen.

Bei gleichem Verhältnis V1 weist ein Härter enthaltend mindestens ein Amin der Formel (V) eine niedrigere Viskosität auf als ein entsprechender Härter, welcher nur eine Mischung aus einem Amin mit nur Aminogruppen der Formel (I) und einem Amin mit nur Aminogruppen der Formel (II) enthält und frei ist von Aminen der Formel (V). Aufgrund der niedrigeren Viskosität ist die Anwesenheit mindestens eines Amins der Formel (V) im erfindungsgemässen Härter bevorzugt.

Bevorzugt steht (m+n) in Formel (V) für 2.

Bevorzugt steht A in Formel (V) für einen (m+n)-wertigen Kohlenwasserstoffrest mit einem Molekulargewicht im Bereich von 28 bis 500g/mol, welcher gegebenenfalls Ethergruppen oder Aminogruppen aufweist. Bevorzugt ist A in Formel (V) frei von primären Aminogruppen.

Das bevorzugte Amin der Formel (V) ist sehr gut verträglich mit Epoxidharzen und härtet mit diesen ohne Blushing-Effekte sehr schnell zu qualitativ hochwertigen Filmen aus.

Besonders bevorzugt steht A in Formel (V) für den Rest eines Amins nach Entfernung der primären Aminogruppen, wobei das Amin ausgewählt ist aus der Gruppe bestehend aus 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,12-Dodecandiamin, 1,4-Diaminocyclohexan, Bis-(4-aminocyclohexyl)methan (H₁₂-MDA), Bis-(4-amino-3-methylcyclohexyl)methan, 1-Amino-3-aminomethyl-3,5,5-trimethylcyclohexan (= Isophorondiamin oder IPDA), 1,3-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 1,3-Bis-(aminomethyl)-benzol, Bis-hexamethylentriamin (BHMT), Diethylentriamin (DETA), Triethylentetramin (TETA), Tetraethylenpentamin (TEPA), Pentaethylenhexamin (PEHA), Polyethylenpolyamin mit 5 bis 7 Ethylenamin-Einheiten (sogenanntes "higher ethylenepolyamine", H EPA), Dipropylentriamin (DPTA), N-(2-Aminoethyl)-1,3-propandiamin (N3-Amin), N,N'-Bis(3-aminopropyl)ethylendiamin (N4-Amin) und Polyoxyalkylen-Diaminen und Polyoxyalkylen-Triaminen mit einem Molekulargewicht von 200 bis 500 g/mol.

Diese besonders bevorzugten Amine der Formel (V) sind besonders gut verträglich mit Epoxidharzen und härten ohne Blushing-Effekte schnell zu qualitativ hochwertigen Filmen aus.

In einer ganz besonders bevorzugten Ausführungsform steht A in Formel (V) für den Rest von MPMD oder TMD oder 1,3-Bis-(aminomethyl)benzol nach Entfernung der zwei primären Aminogruppen. Diese Reste A ergeben sehr niedrigviskose Amine der Formel (V) und damit ausgehärtete Zusammensetzungen von hoher Härte.

In einer weiteren ganz besonders bevorzugten Ausführungsform steht A in Formel (V) für den Rest von DETA, TETA, TEPA, PEHA, HEPA, DPTA, N3-Amin und N4-Amin nach Entfernung der zwei primären Aminogruppen. Diese Reste A ergeben ausgehärtete Zusammensetzungen von besonders hoher Härte und guter Beständigkeit.

In einer weiteren ganz besonders bevorzugten Ausführungsform steht A in Formel (V) für den Rest eines Polyoxyalkylen-Diamins oder Polyoxyalkylen-Triamins mit einem Molekulargewicht von 200 bis 500 g/mol, nach Entfernung der primären Aminogruppen. Diese bevorzugten Reste A ergeben ganz besonders niedrigviskose Amine der Formel (V).

Bevorzugt weist der Härter eine Viskosität, gemessen bei 20°C, im Bereich von 150 bis 2000 mPa·s, besonders bevorzugt im Bereich von 150 bis 1000 mPa·s, und insbesondere im Bereich von 150 bis 700 mPa·s, auf.

Amine mit mindestens einer Aminogruppe der Formel (I) und Amine mit mindestens einer Aminogruppe der Formel (II) können besonders vorteilhaft durch die reduktive Alkylierung von primären Aminen mit Carbonylverbindungen der Formel (VI) beziehungsweise der Formel (VII) erhalten werden.

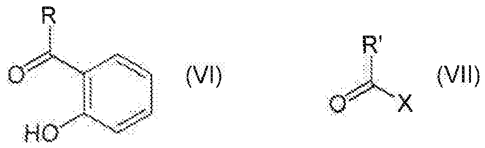

In den Formein (VI) und (VII) weisen R, R' und X die bereits genannten Bedeutungen auf.

Ein Amin der Formel (V) kann besonders vorteilhaft durch die reduktive Alkylierung eines primären Amins mit einer Mischung enthaltend mindestens eine Carbonylverbindung der Formel (VI) und mindestens eine Carbonylverbindung der Formel (VII) erhalten werden.

Als Carbonylverbindung der Formel (VI) geeignet sind Ketone, insbesondere 2'-Hydroxyacetophenon, sowie Salicylaldehyd (2-Hydroxybenzaldehyd). Bevorzugt ist Salicylaldehyd.

Als Carbonylverbindung der Formel (VII) geeignet sind in einer Ausführungsform Ketone und Aldehyde, bei welchen X für einen gegebenenfalls substituierten Arylrest steht. Dies sind insbesondere Benzaldehyd, die isomeren Tolualdehyde, die isomeren Dimethylbenzaldehyde, die isomeren Trimethylbenzaldehyde, die isomeren Naphthaldehyde, insbesondere 1-Naphthaldehyd, Acetophenon, 4'-Methylacetophenon, Propiophenon und 4'-Methylpropiophenon.

Als Carbonylverbindung der Formel (VII) geeignet sind in einer weiteren Ausführungsform Ketone und Aldehyde, bei welchen X für einen gegebenenfalls substituierten Alkyl- oder Cycloalkylrest steht. Dies sind insbesondere Aceton, Methylethylketon, Methylpropylketon, Methylisopropylketon, Methylisobutylketon, Methylpentylketon, Methylisopentylketon, Propanal, Isobutanal, Hexanal, Cyclohexanal und 2-Ethylhexanal.

Als Carbonylverbindung der Formel (VII) geeignet sind in einer weiteren Ausführungsform Ketone und Aldehyden, bei welchen X für einen Rest der Formel (III) steht. Dies sind insbesondere 2,2-Dimethyl-3-methylamino-propanal, 2,2-Dimethyl-3-dimethylaminopropanal, 2,2-Dimethyl-3-bis(2-methoxyethyl)aminopropanal, 2,2-Dimethyl-3-benzylaminopropanal, 2,2-Dimethyl-3-(N-benzylmethylamino)propanal, 2,2-Dimethyl-3-(N-morpholino)propanal und 2,2-Dimethyl-3-(N-(2,6-dimethyl)morpholino)propanal.

Als Carbonylverbindung der Formel (VII) geeignet sind in einer weiteren Ausführungsform Ketone und Aldehyde, bei welchen X für einen Rest der Formel (IV) steht. Dies sind insbesondere 2,2-Dimethyl-3-hydroxypropanal, 2,2-Dimethyl-3-methoxypropanal, 2,2-Dimethyl-3-ethoxypropanal, 2,2-Dimethyl-3-propoxypropanal, 3-Acetoxy-2,2-dimethylpropanal, 2,2-Dimethyl-3-lauroyloxypropanal und 3-Benzoyloxy-2,2-dimethylpropanal.

Bevorzugt ist die Carbonylverbindung der Formel (VII) ausgewählt aus der Gruppe bestehend aus Benzaldehyd, o-Tolualdehyd, m-Tolualdehyd, p-Tolualdehyd, 2,4-Dimethylbenzaldehyd, 3,4-Dimethylbenzaldehyd, 2,4,5-Trimethylbenzaldehyd, 2,4,6-Trimethylbenzaldehyd, Acetophenon, 2,2-Dimethyl-3-(N-morpholino)propanal, 2,2-Dimethyl-3-hydroxypropanal und 2,2-Dimethyl-3-lauroyloxypropanal.

Besonders bevorzugt als Carbonylverbindung der Formel (VII) sind Benzaldehyd und Acetophenon, am meisten bevorzugt ist Benzaldehyd.

Ebenfalls möglich ist die Herstellung von Aminen mit mindestens einer Aminogruppe der Formel (II), indem eine Mischung aus verschiedenen Carbonylverbindungen der Formel (VII) bei der reduktiven Alkylierung eingesetzt wird. Es ist auch möglich, einen erfindungsgemässen Härter ausgehend von Mischungen enthaltend mindestens eine Carbonylverbindung der Formel (VI) und mehreren Carbonylverbindungen der Formel (VII) durch reduktive Alkylierung herzustellen.

Als Ausgangsamine für die reduktive Alkylierung zur Erhaltung des beschriebenen Härters sind Amine der Formel (VIII) geeignet.

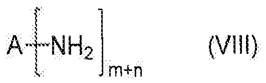

In der Formel (VIII) weisen A, m und n die bereits genannten Bedeutungen auf,

Die Carbonylverbindungen werden in Bezug auf die primären Aminogruppen des Amins der Formel (VIII) bevorzugt stöchiometrisch eingesetzt, wobei Amine mit mindestens einer Aminogruppe der Formel (I) beziehungsweise Amine mit mindestens einer Aminogruppe der Formel (II) erhalten werden, die frei sind von primären Aminogruppen.

Bevorzugt ist ein Herstellverfahren für ein Amin mit mindestens einer Aminogruppe der Formel (I) und ein Amin mit mindestens einer Aminogruppe der Formel (II), deren Aminogruppen im Verhältnis **V1** vorliegen, in einem Einstufen-Prozess. Dabei wird mindestens ein Amin der Formel (VIII) mit einer Mischung aus mindestens einer Carbonylverbindung der Formel (VI) und mindestens einer Carbonylverbindung der Formel (VII) reduktiv alkyliert, wobei das Molverhältnis zwischen der Carbonylverbindung der Formel (VI) und der Carbonylverbindung der Formel (VII) 0.05 bis 1.0, bevorzugt 0.08 bis 0.7, insbesondere 0.1 bis 0.5, beträgt, entsprechend dem angestreben Verhältnis **V1**. Aus diesem Herstellverfahren ist ein Härter erhältlich, der mindestens ein Amin der Formel (V) enthält. Ein solcher Härter weist eine besonders niedrige Viskosität auf.

Ebenfalls möglich ist ein Herstellverfahren für ein Amin mit mindestens einer Aminogruppe der Formel (I) und ein Amin mit mindestens einer Aminogruppe der Formel (II), deren Aminogruppen im Verhältnis V1 vorliegen, in einem Mehrstufen-Prozess. Dabei kann in einer Stufe mindestens ein Amin der Formel (VIII) mit mindestens einer Carbonylverbindung der Formel (VI) reduktiv alkyliert werden, wobei ein Amin mit mindestens einer Aminogruppe der Formel (I) erhalten wird. In einer weiteren Stufe kann mindestens ein Amin der Formel (VIII) mit mindestens einer Carbonylverbindung der Formel (VII) reduktiv alkyliert werden, wobei ein Amin mit mindestens einer Aminogruppe der Formel (II) erhalten wird. Die erhaltenen Amine können anschliessend in einer solchen Menge miteinander vermischt werden, dass deren Aminogruppen der Formel (I) und (II) im Verhältnis **V1** vorliegen. Ein solcher Härter weist typischerweise eine etwas höhere Viskosität auf als ein entsprechender Härter, aus dem vorgängig beschriebenen Einstufen-Prozess.

Die reduktive Alkylierung wird geeigneterweise in Anwesenheit von Wasserstoff und unter erhöhtem Druck durchgeführt. Sie kann direkt mit molekularem Wasserstoff oder indirekt durch Wasserstoff-Transfer von anderen Reagentien erfolgen. Bevorzugt wird molekularer Wasserstoff verwendet. Dabei werden die Bedingungen vorteilhaft so gewählt, dass einerseits die umzusetzenden primären Aminogruppen möglichst vollständig reduktiv alkyliert werden und andererseits möglichst keine anderen Bestandteile des Amins und der Carbonylverbindung hydriert oder zersetzt werden. Bevorzugt wird bei einem Wasserstoff-Druck von 5 bis 100 bar, einer Temperatur von 40 bis 120°C und in Anwesenheit eines geeigneten Katalysators gearbeitet. Als Katalysatoren bevorzugt sind Palladium auf Kohle (Pd/C), Platin auf Kohle (Pt/C), Adams-Katalysator und Raney-Nickel, insbesondere Palladium auf Kohle und Platin auf Kohle.

Als Amin der Formel (VIII) geeignet sind in einer ersten Ausführungsform primäre aliphatische Polyamine, die als Härter für Epoxidharze bekannt sind, insbesondere die Folgenden:
- aliphatische, cycloaliphatische oder arylaliphatische primäre Diamine, wie insbesondere Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-,1,3- und 1,4-Diaminocyclohexan, Bis-(4-aminocyclohexyl)-methan (H₁₂-MDA), Bis-(4-amino-3-methylcyclohexyl)-methan, Bis-(4-amino-3-ethylcyclo-hexyl)-methan, Bis-(4-amino-3,5-dimethylcyclohexyl)-methan, Bis-(4-amino-3-ethyl-5-methylcyclohexyl)-methan (M-MECA), 1-Amino-3-aminomethyl-3,5, 5-trimethylcyclohexan (= Isophorondiamin oder IPDA), 2- und 4-Methyl-1,3-diaminocyclohexan und Mischungen davon, 1,3- und 1,4-Bis-(aminomethyl)-cyclohexan, 2,5(2,6)-Bis-(aminomethyl)-bicyclo[2.2,1]heptan (NBDA), 3(4), 8(9)-Bis-(aminomethyl)-tricyclo[5.2.1.0^{2,6}]decan, 1,4-Diamino-2,2,6-trimethylcyclohexan (TMCDA), 1,8-Menthandiamin, 3,9-Bis-(3-aminopropyl)-2,4,8,10-tetraoxaspiro[5.5]undecan sowie 1,3- und 1,4-Bis-(aminomethyl)benzol;
- aliphatische, cycloaliphatische oder arylaliphatische primäre Triamine wie 4-Aminomethyl-1,8-octandiamin, 1,3,5-Tris-(aminomethyl)benzol, 1,3,5-Tris-(aminomethyl)cyclohexan, Tris-(2-aminoethyl)amin, Tris-(2-aminopropyl)-amin und Tris-(3-aminopropyl-amin;
- Ethergruppen-haltige aliphatische primäre Diamine, wie insbesondere Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadode-can-3,10-diamin, 4,7,10-Trioxatridecan-1,13-diamin und höhere Oligomere dieser Diamine, Bis-(3-aminopropyl)polytetrahydrofurane und andere Polytetrahydrofurandiamine, sowie Polyoxyalkylen-Diamine. Letztere stellen typischefweise Produkte aus der Aminierung von Polyoxyalkylen-Diolen dar und sind beispielsweise erhältlich unter dem Namen Jeffamine^{®} (von Huntsman), unter dem Namen Polyetheramine (von BASF) oder unter dem Namen PC Amine^{®} (von Nitroil). Insbesondere geeignete Polyoxyalkylen-Diamine sind Jeffamine^{®} D-230, Jeffamine^{®} D-400, Jeffamine^{®} D-2000, Jeffamine^{®} D-4000, Jeffamine^{®} XTJ-511, Jeffamine^{®} ED-600, Jeffamine^{®} ED-900, Jeffamine^{®} ED-2003, Jeffamine^{®} XTJ-568, Jeffamine^{®} XTJ-569, Jeffamine^{®} XTJ-523, Jeffamine^{®} XTJ-536, Jeffamine^{®} XTJ-542, Jeffamine^{®} XTJ-559, Jeffamine^{®} EDR-104, Jeffamine^{®} EDR-148, Jeffamine^{®} EDR-176; Polyetheramine D 230, Polyetheramine D 400 und Polyetheramine D 2000, PC Amine^{®} DA 250, PC Amine^{®} DA 400, PC Amine^{®} DA 650 und PC Amine^{®} DA 2000;
- primäre Polyoxyalkylen-Triamine, welche typischerweise Produkte aus der Aminierung von Polyoxyalkylen-Triolen darstellen und beispielsweise erhältlich sind unter dem Namen Jeffamine^{®} (von Huntsman), unter dem Namen Polyetheramine (von BASF) oder unter dem Namen PC Amine^{®} (von Nitroil), wie insbesondere Jeffamine^{®} T-403, Jeffamine^{®} T-3000, Jeffamine^{®} T-5000, Polyetheramine T 403, Polyetheramine T 5000 und PC Amine^{®} TA 403;
- tertiäre Aminogruppen aufweisende Polyamine mit zwei primären aliphatischen Aminogruppen, wie insbesondere N,N'-Bis-(aminopropyl)piperazin, N,N-Bis-(3-aminopropyl)methylamin, N,N-Bis-(3-aminopropyl)ethylamin, N,N-Bis-(3-aminopropyl)propylamin, N,N-Bis-(3-aminopropyl)cyclohexylamin, N,N-Bis-(3-aminopropyl)-2-ethyl-hexylamin, sowie die Produkte aus der doppelten Cyanoethylierung und nachfolgender Reduktion von Fettaminen, welche abgeleitet sind von natürlichen Fettsäuren, wie N,N-Bis-(3-aminopropyl)dodecylamin und N,N-Bis-(3-aminopropyl)talgalkylamin, erhältlich als Triameen^{®} Y12D und Triameen^{®} YT (von Akzo Nobel):
- tertiäre Aminogruppen aufweisende Polyamine mit drei primären aliphatischen Aminogruppen, wie insbesondere Tris-(2-aminoethyl)amin, Tris-(2-aminopropyl)amin und Tris-(3-aminopropyl)amin;
- sekundäre Aminogruppen aufweisende Polyamine mit zwei primären aliphatischen Aminogruppen, wie insbesondere 3-(2-Aminoethyl)aminopropylamin, Bis-hexamethylentriamin (BHMT), Diethylentriamin (DETA), Triethylentetramin (TETA), Tetraethylenpentamin (TEPA), Pentaethylenhexamin (PEHA) und höhere Homologe linearer Polyethylenamine wie Polyethylenpolyamin mit 5 bis 7 Ethylenamin-Einheiten (sogenanntes "higher ethylenepolyamine", HEPA), Produkte aus der mehrfachen Cyanoethylierung oder Cyanobutylierung und anschliessender Hydrierung von primären Di- und Polyaminen mit mindestens zwei primären Aminogruppen, wie Dipropylentriamin (DPTA), N-(2-Aminoethyl)-1,3-propandiamin (N3-Amin), N,N'-Bis(3-aminopropyl)ethylendiamin (N4-Amin), N,N'-Bis-(3-aminopropyl)-1,4-diaminobutan, N5-(3-Aminopropyl)-2-methyl-1,5-pentandiamin, N3-(3-Aminopen-tyl)-1,3-pentandiamin, N5-(3-Amino-1-ethylpropyl)-2-methyl-1,5-pentandiamin und N,N'-Bis-(3-amino-1-ethylpropyl)-2-methyl-1,5-pentandiamin.

Als Amin der Formel (VIII) geeignet sind in einer weiteren Ausführungsform Amine mit nur einer primären aliphatischen Aminogruppe, insbesondere die folgenden:
- primäre und sekundäre Aminogruppen aufweisende Polyamine, wie insbesondere N-Methyl-1,2-ethandiamin, N-Ethyl-1,2-ethandiamin, N-Butyl-1,2-ethandiamin, N-Hexyl-1,2-ethandiamin, N-(2-Ethylhexyl)-1,2-ethandiamin, N-Cyclohexyl-1,2-ethandiamin, 4-Aminomethyl-piperidin, N-(2-Aminoethyl)piperazin, N-Methyl-1,3-propandiamin, N-Butyl-1,3-propandiamin, N-(2-Ethylhexyl)-1,3-propandiamin, N-Cyclohexyl-1,3-propandiamin, 3-Methylamino-1-pentylamin, 3-Ethylamino-1-pentylamin, 3-Cyclohexylamino-1-pentylamin, Fettdiamine wie N-Cocoalkyl-1,3-propandiamin und Produkte aus der Michael-artigen Additionsreaktion von primären aliphatischen Diaminen mit Acrylnitril, Malein- oder Fumarsäurediestern, Citraconsäurediestern, Acryl- und Methacrylsäureestern, Acryl- und Methacrylsäureamiden und Itaconsäurediestern, umgesetzt im Molverhältnis 1:1;
- Aminoalkohole, wie insbesondere 3-Amino-1-propanol, 2-Amino-1-butanol, 6-Amino-1-hexanol, Aminopropyldiethanolamin (APDEA), 4-(2-Aminoethyl)-2-hydroxyethylbenzol, 3-Aminomethyl-3,5,5-trimethyl-cyclohexanol, 2-(2-Aminoethoxy)-ethanol, 2-(2-(2-Aminoethoxy)ethoxy)ethanol, 3-(2-Hydroxy-ethoxy)-propylamin und 3-(2-(2-Hydroxyethoxy)-ethoxy)-propylamin;
- Aminomercaptane, wie insbesondere 2-Aminoethanthiol (Cysteamin), 3-Aminopropanthiol, 4-Amino-1-butanthiol und 6-Amino-1-hexanthiol.

Als Amin der Formel (VIII) bevorzugt sind Polyamine mit zwei oder drei primären aliphatischen Aminogruppen und einem Molekulargewicht bis 500 g/mol.

Besonders bevorzugt ist das Amin der Formel (VIII) ausgewählt aus der Gruppe bestehend aus MPMD, C11-Neodiamin, 1,6-Hexandiamin, 2,5-Dimethyl-1,6-hexandiamin, TMD, 1,12-Dodecandiamin, 1,4-Diaminocyclohexan, H₁₂-MDA, Bis-(4-amino-3-methylcyclohexyl)-methan, Isophorondiamin, 1,3-Bis-(aminomethyl)cyclohexan, NBDA, 3(4),8(9)-Bis-(aminomethyl)-tricyclo-[5.2.1.0^{2,6}]decan, 1,3-Bis-(aminomethyl)benzol, BHMT, DETA, TETA, TEPA, PEHA, HEPA, DPTA, N3-Amin, N4-Amin, Polyoxyalkylen-Diamine und Polyoxyalkylen-Triamine mit einem Molekulargewicht von 200 bis 500 g/mol, insbesondere die kommerziellen Typen Jeffamine^{®} D-230, Jeffamine^{®} D-400 und Jeffamine^{®} T-403 (von Huntsman).

Die Herstellung von Aminen mit mindestens einer Aminogruppe der Formel (I) und von Aminen mit mindestens einer Aminogruppe der Formel (II) durch reduktive Alkylierung auf die beschriebene Weise ist für die Verwendung als Härter für Epoxidharze besonders vorteilhaft, da sehr selektiv primäre Aminogruppen alkyliert werden, während sekundäre Aminogruppen kaum weiter alkyliert werden. Die Produkte aus der beschriebenen Herstellung können deshalb nach der reduktiven Alkylierung ohne weitere Aufbereitung zur Aushärtung von Epoxidharzen in der beschriebenen Weise verwendet werden.

Amine mit mindestens einer Aminogruppe der Formel (I) und Amine mit mindestens einer Aminogruppe der Formel (II) lassen sich auch auf andere Weise als durch reduktive Alkylierung erhalten, insbesondere durch Umsetzung von primären Aminen mit entsprechenden Chloriden oder Bromiden in einem geeigneten Verhältnis. Dabei entstehen Reaktionsgemische, welche typischerweise einen erheblichen Anteil an doppelt alkylierten Aminogruppen aufweisen.

Der beschriebene Härter weist besonders vorteilhafte Eigenschaften auf. Er ist wenig flüchtig und geruchsarm und weist eine so geringe Reaktivität gegenüber CO₂ auf, dass der - im Gegensatz zu vielen aus dem Stand der Technik bekannten Härtern - an der Luft weder zur Bildung von Krusten noch zu Ausfällungen oder Viskositätserhöhungen neigt. Seine Viskosität ist trotz dem Vorhandensein von Phenolgruppen überraschend niedrig. Der Härter ist mit den üblichen kommerziellen Epoxidharzen sehr gut verträglich und verarbeitbar und härtet bei Umgebungstemperatur überraschend schnell und weitgehend ohne störende Blushing-Effekte zu ausgehärteten Zusammensetzungen von hoher Härte und guter Beständigkeit aus. Beim Verhältnis **V1** zwischen Aminogruppen der Formel (I) und Aminogruppen der Formel (II) ist einerseits die Aushärtung mit Epoxidharzen überraschend schnell und andererseits die Viskosität des Härters überraschend niedrig.

Der bevorzugte Härter enthaltend mindestens ein Amin der Formel (V) weist überraschenderweise eine besonders niedrige Viskosität auf und ist deshalb ganz besonders geeignet für emissionsarme Epoxidharz-Systeme mit Öko-Gütesiegeln, wie bereits beschrieben.

Der beschriebene Härter kann weitere, zur Aushärtung von Epoxidharzen geeignete Verbindungen enthalten, insbesondere die Folgenden:
- Monoamine, wie insbesondere Benzylamin, Cyclohexylamin, 2-Phenylethylamin, 2-Methoxyphenylethylamin, 4-Methoxyphenylethylamin, 3,4-Dimethoxyphenylethylamin (Homoveratrylamin), 1- und 2-Butylamin, Isobutylamin, tert.-Butylamin, 3-Methyl-2-butylamin, 1-Hexylamin, 1-Octylamin, 2-Ethyl-1-hexylamin, 2-Methoxy-1-ethylamin, 2-Ethoxy-1-ethylamin, 3-Methoxy-1-propylamin, 3-Ethoxy-1-propylamin, 3-(2-Ethylhexyloxy)propylamin, 3-(2-Methoxyethoxy)propylamin;
- die vorgängig beschriebenen Amine der Formel (VIII);
- sekundäre aliphatische Polyamine, wie insbesondere N,N'-Dibutyl-ethylendiamin, N,N'-Di-tert. butyl-ethylendiamin, N,N'-Diethyl-1,6-hexandiamin, 1-(1-Methylethyl-amino)-3-(1-methylethyl-aminomethyl)-3,5,5-trimethylcyclohexan (Jefflink^{®} 754 von Huntsman), N⁴-Cyclohexyl-2-methyl-N²-(2-methylpropyl)-2,4-pentandiamin, N,N'-Dialkyl-1,3-xyiylendiamin, Bis-(4-(N-3-butylamino)-cyclohexyl)-methan (Clearlink^{®} 1000 von UOP), N-alkylierte Polyetheramine, beispielsweise die Jeffamine^{®}-Typen SD-231, SD-401, ST-404 und SD-2001 (von Huntsman), Produkte aus der Michael-artigen Additionsreaktion von primären aliphatischen Polyaminen mit Michaelakzeptoren wie Acrylnitril, Maleinsäurediester, Fumarsäurediester, Citraconsäurediester, Acrylsäureester, Methacrylsäureester, Zimtsäureester, Itaconsäurediester, Vinylphosphonsäurediester, Vinylsulfonsäurearylester, Vinylsulfone, Vinylnitrile, 1-Nitroethylene oder Knoevenagel-Kondensationsprodukte wie beispielsweise solche aus Malonsäurediestern und Aldehyden wie Formaldehyd, Acetaldehyd oder Benzaldehyd, sowie weiterhin kommerzielle sekundäre aliphatische Polyamine wie Gaskamine^{®} 240 (von Mitsubishi Gas Chemical);

- aromatische Polyamine, wie insbesondere m- und p-Phenylendiamin, 4,4'-, 2,4' und 2,2'-Diaminodiphenylmethan, 3,3'-Dichloro-4,4'-diaminodiphenylmethan (MOCA), 2,4- und 2,6-Toluylendiamin, Mischungen von 3,5-Dimethylthio-2,4- und -2,6-toluylendiamin (erhältlich als Ethacure^{®} 300 von Albemarle), Mischungen von 3,5-Diethyl-2,4- und -2,6-toluylendiamin (DETDA), 3,3',5,5'-Tetraethyl-4,4'-diaminodiphenylmethan (M-DEA), 3,3',5,5'-Tetraethyl-2,2'-dichloro-4,4'-diaminodiphenylmethan (M-CDEA), 3,3'-Diisopropyl-5,5'-dimethyl-4,4'-diaminodiphenylmethan (M-MIPA), 3,3',5,5'-Tetraisopropyl-4,4'-diaminodiphenylmethan (M-DIPA), 4,4'-Diaminodiphenylsulfon (DDS), 4-Amino-N-(4-aminophenyl)benzolsulfonamid, 5,5'-Methylendianthranilsäure, Dimethyl-(5,5'-methylendianthranilat), 1,3-Propylen-bis-(4-aminobenzoat), 1,4-Butylen-bis-(4-aminobenzoat), Polytetramethylenoxid-bis-(4-aminobenzoat) (erhältlich als Versalink^{®} von Air Products), 1,2-Bis-(2-aminophenylthio)ethan, 2-Methylpropyl-(4-chloro-3,5-diaminobenzoat) und tert.Butyl-(4-chloro-3,5-diaminobenzoat);
- Amin/Epoxid-Addukte, insbesondere Addukte aus den genannten Aminen mit Diepoxiden im Molverhältnis von mindestens 2/1, insbesondere im Molverhältnis von 2/1 bis 6/1, sowie Umsetzungsprodukte aus Aminen und Epichlorhydrin, insbesondere jenes von 1,3-Bis-(aminomethyl)benzol, kommerziell erhältlich als Gaskamine^{®} 328 (von Mitsubishi Gas Chemical);
- Polyamidoamine, welche Umsetzungsprodukte aus einer ein- oder mehrwertigen Carbonsäure, beziehungsweise deren Ester oder Anhydride, insbesondere einer Dimerfettsäure, und einem im stöchiometrischen Überschuss eingesetzten aliphatischen, cycloaliphatischen oder aromatischen Polyamin, insbesondere einem Polyalkylenamin wie beispielsweise DETA oderTETA, darstellen, insbesondere die kommerziell erhältlichen Polyamidoamine Versamid^{®} 100, 125, 140 und 150 (von Cognis), Aradur^{®} 223, 250 und 848 (von Huntsman), Euretek^{®} 3607 und 530 (von Huntsman) und Beckopox^{®} EH 651, EH 654, EH 655, EH 661 und EH 663 (von Cytec);
- Mannich-Basen, teilweise auch Phenalkamine genannt, welche Umsetzungsprodukte einer Mannich-Reaktion von Phenolen, insbesondere Cardanol, Nonylphenol oder tert.Butylphenol, mit Aldehyden, insbesondere Formaldehyd, und Polyaminen darstellen, insbesondere die kommerziell erhältlichen Mannich-Basen Cardolite^{®} NC-541, NC-557, NC-558, NC-566, Lite 2001 und Lite 2002 (von Cardolite), Aradut^{®} 3440, 3441, 3442 und 3460 (von Huntsman) und Beckopox^{®} EH 614, EH 621, EH 624, EH 628 und EH 629 (von Cytec);
- flüssige Mercaptan-terminierte Polysulfid-Polymere, bekannt unter dem Markennamen Thiokol^{®} (von Morton Thiokol; beispielsweise erhältlich von SPI Supplies, oder von Toray Fine Chemicals), insbesondere die Typen LP-3, LP-33, LP-980, LP-23, LP-55, LP-56, LP-12, LP-31, LP-32 und LP-2; sowie weiterhin bekannt unter dem Markennamen Thioplast^{®} (von Akzo Nobel), insbesondere die Typen G 10, G 112, G 131, G 1, G 12, G 21, G 22, G 44 und G 4;
- Mercaptan-terminierte Polyoxyalkylen-Ether, erhältlich beispielsweise durch Umsetzung von Polyoxyalkylendi- und -triolen entweder mit Epichlorhydrin oder mit einem Alkylenoxid, gefolgt von Natriumhydrogensulfid;
- Mercaptan-terminierte Verbindungen in Form von Polyoxyalkylen-Derivaten, bekannt unter dem Markennamen Capcure^{®} (von Cognis), insbesondere die Typen WR-8, LOF und 3-800;
- Polyester von Thiocarbonsäuren, beispielsweise Pentaerythritoltetramercaptoacetat, Trimethylolpropantrimercaptoacetat, Glykoldimercaptoacetat, Pen-taerythritoltetra-(3-mercaptopropionat), Trimethylolpropantri-(3-mercaptopropionat) und Glykoldi-(3-mercaptopropionat), sowie die Veresterungsprodukte von Polyoxyalkylendiolen und -triolen, ethoxyliertem Trimethylolpropan und Polyester-Diolen mit Thiocarbonsäuren wie Thioglykolsäure und 2- oder 3-Mercaptopropionsäure;
- weitere Mercaptogruppen aufweisende Verbindungen, wie insbesondere 2,4,6-Trimercapto-1,3,5-triazin, 2,2'-(Ethylendioxy)-diethanthiol (Triethylenglykol-dimercaptan) und Ethandithiol.

Davon bevorzugt sind DAMP, MPMD, C11-Neodiamin, 1,6-Hexandiamin, 2,5-Dimethyl-1,6-hexandiamin, TMD, 1,12-Dodecandiamin, 1,4-Diaminocyclohexan, H₁₂-MDA, Bis-(4-amino-3-methylcyclohexyl)methan, IPDA, 3(4),-8(9)-Bis-(aminomethyl)-tricyclo[5.2.1.0^{2.6}]decan, 1,3-Bis-(aminomethyl)benzol, 1,3-Bis-(aminomethyl)cyclohexan, Gaskamine^{®} 240, NBDA, Polyoxyalkylen-Diamine und -Triamine mit einem Molekulargewicht im Bereich von 200 bis 500 g/mol, insbesondere die Typen Jeffamine^{®} D-230, Jeffamine^{®} D-400 und Jeffamine^{®} T-403, Amin/Epoxid-Addukte, insbesondere Gaskamine^{®} 328.

Der erfindungsgemässe Härter kann weiterhin mindestens einen Beschleuniger enthalten.

Als Beschleuniger geeignet sind Substanzen, welche die Reaktion zwischen Aminogruppen und Epoxidgruppen beschleunigen, insbesondere Säuren oder zu Säuren hydrolysierbare Verbindungen, insbesondere organische Carbonsäuren wie Essigsäure, Benzoesäure, Salicylsäure, 2-Nitrobenzoesäure, Milchsäure, organische Sulfonsäuren wie Methansulfonsäure, p-Toluolsulfonsäure oder 4-Dodecylbenzolsulfonsäure, Sulfonsäureester, andere organische oder anorganische Säuren wie insbesondere Phosphorsäure, oder Mischungen der vorgenannten Säuren und Säureester; weiterhin tertiäre Amine wie insbesondere 1,4-Diazabicyclo[2.2.2]octan, Benzyldimethylamin, α-Methylbenzyldimethylamin, Triethanolamin, Dimethyl-aminopropylamin, Imidazole wie insbesondere N-Methylimidazol, N-Vinylimidazol oder 1,2-Dimethylimidazol, Salze solcher tertiärer Amine, quaternäre Ammoniumsalze, wie insbesondere Benzyltrimethylammoniumchlorid, Amidine wie insbesondere 1,8-Diazabicyclo-[5.4.0]undec-7-en, Guanidine wie insbesondere 1,1,3,3-Tetramethylguanidin, Phenole, insbesondere Bisphenole, Phenol-Harze und Mannich-Basen wie insbesondere 2-(Dimethylaminomethyl)phenol, 2,4,6-Tris-(dimethylaminomethyl)phenol und Polymere aus Phenol, Formaldehyd und N,N-Dimethyl-1,3-propandiamin, Phosphite wie insbesondere Di- und Triphenylphosphite, sowie Mercaptogruppen aufweisende Verbindungen, wie sie bereits vorgängig genannt wurden.

Bevorzugte Beschleuniger sind Salicylsäure und 2,4,6-Tris-(dimethylaminomethyl)phenol,

Der erfindungsgemässe Härter kann weiterhin mindestens einen nicht einbaubaren Verdünner enthalten, wie insbesondere Xylol, 2-Methoxyethanol, Dimethoxyethanol, 2-Ethoxyethanol, 2-Propoxyethanol, 2-Isopropoxyethanol, 2-Butoxyethanol, 2-Phenoxyethanol, 2-Benzyloxyethanol, Benzylalkohol, Ethylenglykol, Ethylenglykoldimethylether, Ethylenglykoldiethylether, Ethylenglykoldibutylether, Ethylenglykoldiphenylether, Diethylenglykol, Diethylenglykol-monomethylether, Diethylenglykol-monoethylether, Diethylenglykol-mono-n-butylether, Diethylenglykoldimethylether, Diethylenglykoldiethylether, Diethylenglykoldi-n-butylylether, Propylenglykolbutylether, Propylenglykolphenylether, Dipropylenglykol, Dipropylenglykolmonomethylether, Dipropylenglykoldimethylether, Dipropylenglykoldi-n-butylether, N-Methylpyrrolidon, Diphenylmethan, Diisopropylnaphthalin, Erdölfraktionen wie zum Beispiel Solvesso^{®}-Typen (von Exxon), Alkylphenole wie tert.Butylphenol, Nonylphenol, Dodecylphenol und 8,11,14-Pentadecatrienylphenol (Cardanol, aus Cashewschalen-Öl, erhältlich beispielsweise als Cardolite NC-700 von Cardolite Corp., USA), styrolisiertes Phenol, Bisphenole, aromatische Kohlenwasserstoffharze, insbesondere Phenolgruppen-haltige Typen, Adipate, Sebacate, Phthalate, Benzoate, organische Phosphor- und Sulfonsäureester und Sulfonamide. Bevorzugt sind Benzylalkohol, Dodecylphenol, tert.Butylphenol, styrolisiertes Phenol und phenolgruppenhaltige aromatische Kohlenwasserstoffharze, insbesondere die Novares^{®}-Typen LS 500, LX 200, LA 300 und LA 700 (von Rütgers).

Bevorzugt enthält der Härter keinen oder nur einen geringen Gehalt an nicht einbaubaren Verdünnern, besonders bevorzugt weniger als 25 Gewichts-%, insbesondere weniger als 15 Gewichts-% und am meisten bevorzugt weniger als 5 Gewichts-%. Insbesondere werden dem Härter keine nicht einbaubaren Verdünner zugesetzt.

Ein weiterer Gegenstand der Erfindung ist eine Epoxidharz-Zusammensetzung, enthaltend
a) mindestens ein Epoxidharz, und
b) mindestens einen Härter wie vorgängig beschrieben.

Als Epoxidharz sind übliche technische Epoxidharze geeignet. Diese werden auf bekannte Art und Weise erhalten, zum Beispiel aus der Oxidation der entsprechenden Olefine oder aus der Reaktion von Epichlorhydrin mit den entsprechenden Polyolen, Polyphenolen oder Aminen.

Als Epoxidharz besonders geeignet sind sogenannte Polyepoxid-Flüssigharze, im folgenden als "Flüssigharz" bezeichnet. Diese weisen eine Glasübergangstemperatur auf, welche üblicherweise unterhalb von 25°C liegt, im Gegensatz zu den sogenannten Festharzen, welche eine Glasübergangstemperatur oberhalb von 25°C aufweisen und sich zu bei 25°C schüttfähigen Pulvern zerkleinern lassen.

In einer Ausführungsform handelt es sich beim Flüssigharz um ein aromatisches Polyepoxid. Dafür geeignet sind beispielsweise Flüssigharze der Formel (IX), 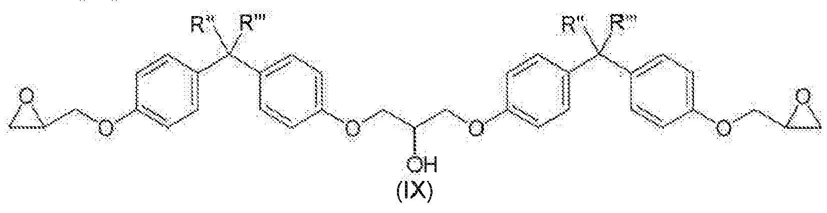 wobei R" und R"' unabhängig voneinander jeweils für ein Wasserstoffatom oder für eine Methylgruppe stehen, und s im Mittel für einen Wert von 0 bis 1 steht. Bevorzugt sind solche Flüssigharze der Formel (IX), bei denen der Index s im Mittel für einen Wert von kleiner als 0.2 steht.

Bei den Flüssigharzen der Formel (IX) handelt es sich um Diglycidylether von Bisphenol-A, Bisphenol-F und Bisphenol-A/F, wobei A für Aceton und F für Formaldehyd steht, welche als Edukte zur Herstellung dieser Bisphenole dienen. Ein Bisphenol-A-Flüssigharz weist dementsprechend Methylgruppen, ein Bisphenol-F-Flüssigharz Wasserstoffatome und ein Bisphenol-A/F-Flüssigharz sowohl Methylgruppen als auch Wasserstoffatome als R" und R'" in Formel (IX) auf. Im Fall von Bisphenol-F können auch Stellungsisomere vorhanden sein, insbesondere abgeleitet von 2,4'- und 2,2'-Hydroxyphenylmethan.

Weitere geeignete aromatische Flüssigharze sind die Glycidylisierungsprodukte von
- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylyphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenylethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxy-naphthalin, Tris-(4-hydroxyphenyl)-methan, 1,1,2,2-Tetrakis-(4-hydroxyphenyl)-ethan, Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M).

Als Epoxidharz eignet sich auch ein aliphatisches oder cycloaliphatisches Polyepoxid, wie beispielsweise
- ein Glycidylether eines gesättigten oder ungesättigten, verzweigten oder unverzweigten, zyklischen oder offenkettigen C₂- bis C₃₀-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromo-neopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythrol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F;
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol-A-, -F- oder -A/F-Festharz, welches ähnlich aufgebaut ist wie die bereits genannten Flüssigharze der Formel (V), aber anstelle des Index s einen Wert von 2 bis 12 aufweist, und eine Glasübergangstemperatur oberhalb von 25°C aufweist.

Als Epoxidharz eignen sich schliesslich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Als Epoxidharz bevorzugt sind Flüssigharze auf der Basis eines Bisphenols, insbesondere auf der Basis von Bisphenol-A, Bisphenol-F- oder Bisphenol-A/F, wie sie kommerziell beispielsweise von Dow, Huntsman und Hexion erhältlich sind. Diese Flüssigharze weisen eine für Epoxidharze niedrige Viskosität und im ausgehärteten Zustand gute Eigenschaften als Beschichtungen auf. Sie können gegebenenfalls in Kombination mit Bisphenol A-Festharz oder Bisphenol-F-Novolak-Epoxidharz vorhanden sein.

Das Epoxidharz kann einen Reaktivverdünner, insbesondere einen mindestens eine Epoxidgruppe aufweisenden Reaktivverdünner, enthalten. Als Reaktivverdünner geeignet sind beispielsweise die Glycidylether von ein- oder mehrwertigen Phenolen und aliphatischen oder cycloaliphatischen Alkoholen, wie insbesondere die bereits genannten Polyglycidylether von Di- oder Polyolen, sowie weiterhin insbesondere Phenylglycidylether, Kresylglycidylether, p-n-Butyl-phenylglycidylether, p-tert.Butyl-phenylglycidylether, Nonylphenylglycidylether, Allylglycidylether, Butylglycidylether, Hexylglycidylether, 2-Ethylhexylglycidylether, sowie Glycidylether von natürlichen Alkoholen, wie zum Beispiel C₈- bis C₁₀-Alkylglycidylether oder C₁₂- bis C₁₄-Alkylglycidylether. Die Zugabe eines Reaktivverdünners zum Epoxidharz bewirkt eine Reduktion der Viskosität, sowie - im ausgehärteten Zustand der Epoxidharz-Zusammensetzung - eine Reduktion der Glasübergangstemperatur und der mechanischen Werte.

Gegebenenfalls enthält die Epoxidharz-Zusammensetzung weitere Bestandteile, insbesondere in Epoxidharz-Zusammensetzungen üblicherweise eingesetzte Hilfs- und Zusatzstoffe, beispielsweise die Folgenden:
- Lösemittel, Verdünner, Filmbildehilfsmittel oder Extender, wie insbesondere die bereits genannten nicht einbaubaren Verdünner;
- Reaktivverdünner, insbesondere Epoxidgruppen aufweisende Reaktivverdünner, wie sie vorgängig erwähnt wurden, epoxidiertes Sojaöl oder Leinöl, Acetoacetatgruppen aufweisende Verbindungen, insbesondere acetoacetylierte Polyole, Butyrolakton, Carbonate, Aldehyde, sowie weiterhin Isocyanate und Reaktivgruppen-aufweisende Silikone;
- Polymere, wie beispielsweise Polyamide, Polysulfide, Polyvinylformal (PVF), Polyvinylbutyral (PVB), Polyurethane (PUR), Polymere mit Carboxylgruppen, Polyamide, Butadien-Acrylnitril-Copolymere, Styrol-Acrylnitril-Copolymere, Butadien-Styrol-Copolymere, Homo- oder Copolymere von ungesättigten Monomeren, insbesondere aus der Gruppe umfassend Ethylen, Propylen, Butylen, Isobutylen, Isopren, Vinylacetat und Alkyl(meth)acrylate, insbesondere chlorsulfonierte Polyethylene und Fluorhaltige Polymere, Sulfonamid-modifizierte Melamine und gereinigte Montan-Wachse;
- anorganische und organische Füllstoffe, zum Beispiel gemahlene oder gefällte Calciumcarbonate, welche gegebenenfalls mit Fettsäuren, insbesondere Stearaten, beschichtet sind, Baryt (Schwerspat), Talke, Quarzmehle, Quarzsand, Eisenglimmer, Dolomite, Wollastonite, Kaoline, Mica (Kalium-Aluminium-Silikat), Molekularsiebe, Aluminiumoxide, Aluminiumhydroxide, Magnesiumhydroxid, Kieselsäuren, Zemente, Gipse, Flugaschen, Russ, Graphit, Metall-Pulver wie Aluminium, Kupfer, Eisen, Zink, Silber oder Stahl, PVC-Pulver oder Hohlkugeln;
- Fasern, insbesondere Glasfasern, Kohlefasern, Metallfasern, Keramikfasern oder Kunststofffasern wie Polyamidfasern oder Polyethylenfasern;
- Pigmente, insbesondere Titandioxid und Eisenoxide;
- die vorgenannten Beschleuniger;
- Rheologie-Modifizierer, wie insbesondere Verdickungsmittel, zum Beispiel Schichtsilikate wie Bentonite, Derivate von Rizinusöl, hydriertes Rizinusöl, Polyamide, Polyurethane, Harnstoffverbindungen, pyrogene Kieselsäuren, Celluloseether und hydrophob modifizierte Polyoxyethylene;
- Haftverbesserer, beispielsweise Organoalkoxysilane wie Aminosilane, Mercaptosilane, Epoxysilane, Vinylsilane, (Meth)acrylsilane, Isocyanatosilane, Carbamatosilane, Alkylsilane, S-(Alkylcarbonyl)-mercaptosilane und Aldiminosilane, sowie oligomere Formen dieser Silane, insbesondere 3-Glycidoxypropyltrimethoxysilan, 3-Aminopropyltrimethoxysilan, N-(2-Aminoethyl)-3-aminopropyl-trimethoxysilan, N-(2-Aminoethyl)-N'-[3-(trimethoxysilyl)propyl]ethylendiamin, 3-Mercaptopropyltrimethoxysilan, 3-Isocyanatopropyltrimethoxysilan, 3-Ureidopropyltrimethoxysilan, 3-Chloropropyltrimethoxysilan, Vinyltrimethoxysilan, oder die entsprechenden Organosilane mit Ethoxygruppen anstelle der Methoxygruppen;
- Stabilisatoren gegen Oxidation, Wärme, Licht und UV-Strahlung;
- flammhemmende Substanzen, insbesondere Verbindungen wie Aluminiumhydroxid (Al(OH)₃; auch ATH für "Aluminiumtrihydrat" genannt), Magnesiumhydroxid (Mg(OH)₂; auch MDH für "Magnesiumdihydrat" genannt), Ammoniumsulfat ((NH₄)₂SO₄), Borsäure (B(OH)₃), Zinkborat, Zinkphosphat, Melaminborat und Melamincyanurat; Phosphor-haltige Verbindungen wie Ammoniumphosphat ((NH₄)₃PO₄), Ammoniumpolyphosphat, Melaminphosphat, Melaminpyrophosphat, Triphenylphosphat, Diphenylkresylphosphat, Trikresylphosphat, Triethylphosphat, Tris-(2-ethylhexyl)phosphat, Trioctylphosphat, Mono-, Bis- und Tris-(isopropylphenyl)phosphat, Resorcinol-bis(diphenylphosphat), Resorcinol-diphosphat-Oligomer, Tetraphenyl-resorcinol-diphosphit, Ethylendiamin-diphosphat und Bisphenol-A-bis(diphenylphosphat); Halogen-haltige Verbindungen wie Chloroalkylphosphate, insbesondere Tris-(chloroethyl)phosphat, Tris-(chloropropyl)phosphat und Tris-(dichloroisopropyl)phosphat, polybromierte Diphenylether, insbesondere Decabromdiphenylether, polybromiertes Diphenyloxid, Tris-[3-Bromo-2,2-bis(bromomethyl)propyl]phosphat, Tetrabromo-Bisphenol-A, Bis-(2,3-dibromopropylether) von Bisphenol A, bromierte Epoxidharze, Ethylen-bis(tetrabromophtalimid), Ethylen-bis(dibromonorbomandicarboximid), 1,2-Bis-(tribromophenoxy)ethan, Tris-(2,3-dibromopropyl)isocyanurat, Tribromophenol, Hexabromocyclododecan, Bis-(hexachlorocyclopentadieno)cyclooctan und Chlorparaffine; sowie Kombinationen aus einer Halogen-haltigen Verbindung und Antimontrioxid (Sb₂O₃) oder Antimonpentoxid (Sb₂O₅);
- oberflächenaktive Substanzen, insbesondere Netzmittel, Verlaufsmittel, Entlüftungsmittel und Entschäumer;
- Biozide, wie beispielsweise Algizide, Fungizide oder das Pilzwachstum hemmende Substanzen.

Bevorzugt enthält die Epoxidharz-Zusammensetzung weitere Hilfs- und Zusatzstoffe, insbesondere Netzmittel, Verlaufsmittel, Entschäumer, Stabilisatoren, Pigmente und Katalysatoren, insbesondere Salicylsäure oder 2,4,6-Tris-(dimethylaminomethyl)phenol.

Bevorzugt enthält die Epoxidharz-Zusammensetzung keinen oder nur einen geringen Gehalt an nicht einbaubaren Verdünnern, besonders bevorzugt weniger als 10 Gewichts-%, insbesondere weniger als 5 Gewichts-%, am meisten bevorzugt weniger als 2 Gewichts-%.

In der Epoxidharz-Zusammensetzung liegt das Verhältnis der Anzahl von gegenüber Epoxidgruppen reaktiven Gruppen gegenüber der Anzahl Epoxidgruppen im Bereich von 0.5 bis 1.5, bevorzugt 0.7 bis 1.2.

Die in der Epoxidharz-Zusammensetzung vorhandenen Aminwasserstoffe und gegebenenfalls vorhandene weitere gegenüber Epoxidgruppen reaktive Gruppen reagieren mit den Epoxidgruppen unter deren Ringöffnung (Additionsreaktion). Als Ergebnis dieser Reaktionen polymerisiert die Zusammensetzung und härtet schliesslich aus. Dem Fachmann ist bekannt, dass primäre Aminogruppen gegenüber Epoxidgruppen difunktionell sind und eine primäre Aminogruppe somit als zwei gegenüber Epoxidgruppen reaktive Gruppen zählt.

Insbesondere ist die Epoxidharz-Zusammensetzung eine zweikomponentige Zusammensetzung, bestehend aus
(i) einer Harz-Komponente enthaltend mindestens ein Epoxidharz und
(ii) einer Härter-Komponente enthaltend den Härter wie vorgängig beschrieben.

Die Komponenten der zweikomponentigen Zusammensetzung werden jeweils in einem eigenen Gebinde gelagert. Weitere Bestandteile der zweikomponentigen Epoxidharz-Zusammensetzung können als Bestandteil der Harz-oder der Härter-Komponente vorhanden sein, wobei gegenüber Epoxidgruppen reaktive weitere Bestandteile bevorzugt ein Bestandteil der Härter-Komponente sind. Ein geeignetes Gebinde zum Lagern der Harz- oder der Härter-Komponente ist insbesondere ein Fass, ein Hobbock, ein Beutel, ein Eimer, eine Büchse, eine Kartusche oder eine Tube. Die Komponenten sind lagerfähig, das heisst, dass sie vor ihrer Anwendung während mehreren Monaten bis zu einem Jahr und länger aufbewahrt werden können, ohne dass sie sich in ihren jeweiligen Eigenschaften in einem für ihren Gebrauch relevanten Ausmass verändern.

Zur Anwendung der zweikomponentigen Epoxidharz-Zusammensetzung werden die Harz-Komponente und die Härter-Komponente kurz vor oder während der Applikation miteinander vermischt. Das Mischungsverhältnis zwischen den beiden Komponenten wird bevorzugt so gewählt, dass die gegenüber Epoxidgruppen reaktiven Gruppen der Härter-Komponente in einem geeigneten Verhältnis zu den Epoxidgruppen der Harz-Komponente stehen, wie vorgängig beschrieben. In Gewichtsteilen liegt das Mischungsverhältnis zwischen der Harz-Komponente und der Härter-Komponente üblicherweise im Bereich von 1:10 bis 10:1.

Die Vermischung der beiden Komponenten erfolgt mittels eines geeigneten Verfahrens; sie kann kontinuierlich oder batchweise erfolgen. Falls das Vermischen vor der Applikation erfolgt, muss darauf geachtet werden, dass zwischen dem Vermischen der Komponenten und der Applikation nicht zu viel Zeit vergeht, da es dadurch zu Störungen, wie beispielsweise einem verlangsamten oder unvollständigen Aufbau der Haftung zum Substrat, kommen kann. Die Vermischung erfolgt insbesondere bei Umgebungstemperatur, welche typischerweise im Bereich von etwa 5 bis 50°C, bevorzugt bei etwa 10 bis 30°C, liegt.

Mit der Vermischung der beiden Komponenten beginnt die Aushärtung durch chemische Reaktion, wie vorgängig beschrieben. Die Aushärtung erfolgt insbesondere bei Umgebungstemperatur, welche typischerweise im Bereich von etwa 5 bis 50°C, bevorzugt bei etwa 10 bis 30°C, liegt. Sie erstreckt sich typischerweise über einige Tage bis Wochen, bis sie unter den gegebenen Bedingungen weitgehend abgeschlossen ist. Die Dauer hängt unter anderem von der Temperatur, der Reaktivität der Bestandteile und deren Stöchiometrie sowie der Gegenwart von Beschleunigern ab.

Ein weiterer Gegenstand der Erfindung ist somit auch eine ausgehärtete Zusammensetzung erhalten aus der Aushärtung einer Epoxidharz-Zusammensetzung wie im vorliegenden Dokument beschrieben.

Die Applikation der Epoxidharz-Zusammensetzung erfolgt auf mindestens ein Substrat, wobei die Folgenden besonders geeignet sind:
- Glas, Glaskeramik, Beton, Mörtel, Backstein, Ziegel, Gips und Natursteine wie Granit oder Marmor;
- Metalle und Legierungen, wie Aluminium, Eisen, Stahl und Buntmetalle, sowie oberflächenveredelte Metalle und Legierungen, wie verzinkte oder verchromte Metalle;
- Leder, Textilien, Papier, Holz, mit Harzen, beispielsweise Phenol-, Melamin-oder Epoxidharzen, gebundene Holzwerkstoffe, Harz-Textil-Verbundwerkstoffe und weitere sogenannte Polymer-Composites;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- beschichtete Substrate, wie pulverbeschichtete Metalle oder Legierungen;
- Farben und Lacke, insbesondere Automobildecklacke.

Die Substrate können bei Bedarf vor dem Applizieren der Epoxidharz-Zusammensetzung vorbehandelt werden. Derartige Vorbehandlungen umfassen insbesondere physikalische und/oder chemische Reinigungsverfahren, beispielsweise Schleifen, Sandstrahlen, Kugelstrahlen, Bürsten oder dergleichen, wobei dabei entstehende Stäube vorteilhaft abgesaugt werden, sowie weiterhin Behandeln mit Reinigern oder Lösemitteln oder das Aufbringen eines Haftvermittlers, einer Haftvermittlerlösung oder eines Primers.

Die beschriebene Epoxidharz-Zusammensetzung ist vorteilhaft verwendbar als Faserverbundwerkstoff (Composite), Vergussmasse, Dichtstoff, Klebstoff, Belag, Beschichtung, Anstrich, Lack, Versiegelung, Grundierung, Primer, Schaum, Formblock, Elastomer, Faser, Folie oder Membran.

Insbesondere verwendbar ist sie als Vergussmasse, Dichtstoff und Klebstoff, wie beispielsweise als Elektrovergussmasse, Abdichtungsmasse, Spachtelmasse, Fugendichtstoff, Montageklebstoff, Karrosserieklebstoff, Sandwichelementklebstoff, Halbschalenklebstoff, beispielsweise für Rotorblätter von Windkraftanlagen, Brückenelementklebstoff, Kaschierklebstoff, Laminierklebstoff oder Verankerungsklebstoff; sowie weiterhin als Belag, Beschichtung, Anstrich, Lack, Versiegelung, Grundierung und Primer für Bau- und Industrieanwendungen, wie insbesondere als Bodenbelag und Bodenbeschichtung für Innenräume wie Büros, Industriehallen, Turnhallen oder Kühlräume, oder im Aussenbereich für Balkone, Terrassen, Parkdecks, Brücken oder Dächer, als Schutzbeschichtung für Beton, Zement, Metalle oder Kunststoffe, beispielsweise zur Oberflächenversiegelung von Ladeflächen, Tanks, Silos, Schächten, Rohrleitungen, Pipelines, Maschinen oder Stahlkonstruktionen, beispielsweise von Schiffen, Piers, Offshore-Plattformen, Schleusentoren, Wasserkraftwerken, Flussbauten, Schwimmbädern, Windkraftanlagen, Brücken, Kaminen, Kranen oder Spundwänden, wobei diese Beschichtungen die jeweiligen Substrate insbesondere gegen Korrosion, Abrasion, Feuchtigkeit, Wasser- und/oder Salzeinwirkung oder Chemikalien schützen; sowie weiterhin als Voranstrich, Haftanstrich, Korrosionsschutz-Primer oder zur Hydrophobierung von Oberflächen. Insbesondere geeignet ist die beschriebene Zusammensetzung auch als Beschichtung für sogenannt schweren Korrosionsschutz im und am Wasser, insbesondere auch im und am Meerwasser. Auf die vollständig oder teilweise ausgehärtete Epoxidharz-Zusammensetzung kann insbesondere bei ihrer Verwendung als Beschichtung, Belag oder Anstrich eine weitere Beschichtung, ein weiterer Belag, oder ein weiterer Anstrich appliziert werden, wobei es sich bei dieser weiteren Schicht ebenfalls um eine Epoxidharz-Zusammensetzung handeln kann, aber auch um ein anderes Material, insbesondere um eine Polyurethan- oder Polyharnstoff-Beschichtung.

Besonders vorteilhaft verwendbar ist die beschriebene Epoxidharz-Zusammensetzung als Beschichtung. Als Beschichtung werden dabei flächig aufgebrachte Beläge aller Art verstanden, insbesondere auch Anstriche, Lacke, Versiegelungen, Grundierungen und Primer, wie vorgängig beschrieben. Insbesondere vorteilhaft verwendbar ist die beschriebene Epoxidharz-Zusammensetzung in emissionsarmen Systemen mit Öko-Gütesiegeln, beispielsweise nach Emicode (EC1 Plus), AgBB, DIBt, Der Blaue Engel, AFSSET, RTS (M1) und US Green Building Council (LEED).

Ein weiterer Gegenstand der Erfindung ist somit die Verwendung der beschriebenen Epoxidharz-Zusammensetzung als Beschichtung

Als Beschichtung wird die Epoxidharz-Zusammensetzung vorteilhaft in einem Verfahren zum Beschichten verwendet, wobei sie eine flüssige Konsistenz mit niedriger Viskosität und guten Verlaufseigenschaften aufweist und insbesondere als selbstverlaufende Beschichtung auf überwiegend ebene Flächen oder als Anstrich appliziert werden kann. Bevorzugt weist die Epoxidharz-Zusammensetzung bei dieser Applikation unmittelbar nach dem Vermischen der Harz- und der Härter-Komponente eine Viskosität, gemessen bei 20°C, im Bereich von 300 bis 2'000 mPa·s, bevorzugt im Bereich von 300 bis 1'500 mPa·s, insbesondere im Bereich von 300 bis 1'000 mPa·s, auf. Die vermischte Zusammensetzung wird innerhalb der Verarbeitungszeit flächig als dünner Film mit einer Schichtdicke von typischerweise etwa 50 µm bis etwa 5 mm auf ein Substrat appliziert, typischerweise bei Umgebungstemperatur. Die Applikation erfolgt beispielsweise durch Aufgiessen auf das zu beschichtende Substrat. Dabei wird die Zusammensetzung im flüssigen Zustand mit Hilfe beispielsweise eines Rakels oder einer Zahntraufel gleichmässig verteilt. Zusätzlich kann die verteilte Zusammensetzung mit einer Stachelwalze egalisiert und entlüftet werden. Die Applikation kann aber auch manuell durch Pinsel oder Roller oder als Spritzapplikation erfolgen, beispielsweise als Korrosionsschutzbeschichtung auf Stahl. Bei der Aushärtung entstehen typischerweise weitgehend klare, glänzende und nichtklebrige Filme von hoher Härte und guter Beständigkeit, welche eine gute Haftung zu verschiedensten Substraten aufweisen. Mit den beschriebenen Härtern sind selbstverlaufende Epoxidharz-Beschichtungen zugänglich, welche ohne oder mit nur geringen Anteilen an nicht einbaubaren Verdünnern auskommen, und der Gehalt an primären Aminogruppen kann so tief gehalten werden, dass kaum Reaktionen mit CO₂ aus der Luft auftreten. Dadurch bleiben Blushing-Effekte bei der flächigen Anwendung auch unter ungünstigen, das heisst das Blushing begünstigenden, Reaktionsbedingungen, insbesondere bei tiefen Aushärtungstemperaturen im Bereich von 5 bis 10°C und hoher Luftfeuchtigkeit, weitgehend aus.

Ein weiterer Gegenstand der Erfindung ist ein Artikel, erhalten aus der Verwendung der beschriebenen Epoxidharz-Zusammensetzung als Beschichtung,

Die beschriebene Epoxidharz-Zusammensetzung zeichnet sich durch zahlreiche vorteilhafte Eigenschaften aus. Sie weist nur wenig Geruch auf und ist bei Raumtemperatur überraschend dünnflüssig, womit sie auch ohne weitere Verdünner gut verarbeitbar ist, insbesondere auch bei flächiger Anwendung. Sie härtet bei Umgebungstemperatur und insbesondere auch bei feucht-kalten Bedingungen überraschend schnell und ohne störende Blushing-Effekte aus und verfügt im ausgehärteten Zustand über eine hohe Härte und gute Beständigkeiten. Ausgehärtete Filme sind typischerweise nicht trüb und weisen eine ebenmässig glänzende, kraterfreie und nichtklebrige Oberfläche auf. Die in den Aminogruppen der Formel (I) enthaltenen Phenolgruppen üben eine beschleunigende Wirkung auf die Aushärtung aus, insbesondere bei kühleren Temperaturen im Bereich von 5 bis 10°C, ohne die Viskosität der Zusammensetzung so stark zu erhöhen, dass diese zur besseren Verarbeitbarkeit weiter verdünnt werden müsste. Weiterhin erhöhen die eingebauten Phenolgruppen die Beständigkeit der ausgehärteten Zusammensetzung, insbesondere gegenüber organischen Säuren, wie sie in Lebensmitteln enthalten sind. Besonders niedrigviskos ist die Epoxidharz-Zusammensetzung überraschenderweise, wenn sie mindestens ein Amin der Formel (V) enthält.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### 1. Beschreibung der Messmethoden

Der **Amingehalt**, das heisst der totale Gehalt an Aminogruppen in den hergestellten Verbindungen, wurde titrimetrisch bestimmt (mit 0.1N HClO₄ in Eisessig, gegen Kristallviolett) und ist stets angegeben in mmol N/g. **Infrarotspektren** wurden als unverdünnte Filme auf einem mit horizontaler ATR-Messeinheit mit Znse-Kristall ausgestatteten FT-IR Gerät 1600 von Perkin-Elmer gemessen; die Absorptionsbanden sind in Wellenzahlen (cm⁻¹) angegeben (Messfenster: 4000-650 cm⁻¹).

Die **Viskositäten** wurden auf einem thermostatisierten Kegel-Platten-Viskosimeter Rheotec RC30 (Kegeldurchmesser 50 mm, Kegelwinkel 1°, Kegelspitze-Platten-Abstand 0.05 mm, Scherrate 10-100 s⁻¹) gemessen.

### 2. verwendete Substanzen und Abkürzungen dafür:

- TETA: Triethylentetramin (techn., Amingehalt ca. 25.7 mmol N/g)
- N4-Amin: N,N'-Bis(3-aminopropyl)ethylendiamin (von BASF)
- IPDA: 1-Amino-3-aminomethyl-3,5,5-trimethylcyclohexan (= isophorondiamin)
- MXDA: 1,3-Bis-(aminomethyl)benzol (= m-Xylylendiamin)
- D-230: Polypropylenglykol-Diamin, mittleres Molekulargewicht ca. 240 g/mol, Amingehalt ca. 8.29 mmol N/g (Jeffamine^{®} D-230 von Huntsman)

### 3. Allgemeine Herstellvorschrift für die reduktive Alkylierung:

In einem Rundkolben wurden ein Aldehyd oder eine Mischung von Aldehyden und ein Amin unter Stickstoffatmosphäre in ausreichend Isopropanol gelöst Die Lösung wurde während 30 Minuten bei Raumtemperatur gerührt und anschliessend bei einem Wasserstoff-Druck von 80 bar, einer Temperatur von 80°C und einem Fluss von 3 ml/min auf einer kontinuierlich arbeitenden Hydrierapparatur mit Pd/C-Festbettkatalysator hydriert. Zur Reaktionskontrolle wurde mittels IR-Spektroskopie überprüft, ob die Iminbande bei ca. 1665 cm⁻¹ verschwunden war. Darauf wurde die Lösung im Vakuum bei 80°C eingeengt.

### 4. Herstellung von Aminen

**Amin 1**: Gemäss der allgemeinen Herstellvorschrift für die reduktive Alkylierung wurden 17.2 g Benzaldehyd und 15.0 g TETA umgesetzt. Erhalten wurde ein klares, leicht gelbliches Öl mit einer Viskosität von 260 mPa·s bei 20°C und einem Amingehalt von 13.1 mmol N/g.
**Amin 2**: Gemäss der allgemeinen Herstellvorschrift für die reduktive Alkylierung wurden 19.8 g Salicylaldehyd (= o-Hydroxybenzaldehyd) und 15.0 g TETA umgesetzt. Erhalten wurde ein klares, gelbliches Öl mit einer Viskosität von 74'100 mPa·s bei 30°C, bzw. 1'000 mPa·s bei 60°C, und einem Amingehalt von 12.2 mmol N/g.
**Amin 3**: Gemäss der allgemeinen Herstellvorschrift für die reduktive Alkylierung wurden 19.8 g p-Hydroxybenzaldehyd und 15.0 g TETA umgesetzt. Erhalten wurde ein klares, rötliches Öl mit einer Viskosität von 4'290 mPa·s bei 60°C, und einem Amingehalt von 12.4 mmol N/g.
**Amin 4**: Gemäss der allgemeinen Herstellvorschrift für die reduktive Alkylierung wurden 21.45 g 3-Hydroxypivalaldehyd und 18.40 g TETA umgesetzt. Erhalten wurde ein klares, leicht gelbliches Öl mit einer Viskosität von 930 mPa·s bei 20°C und einem Amingehalt von 12.50 mmol N/g.
**Amin 5**: Gemäss der allgemeinen Herstellvorschrift für die reduktive Alkylierung wurden 34.24 g 2,2-Dimethyl-3-(N-morpholino)propanal und 18.41 g TETA umgesetzt. Erhalten wurde ein klares, leicht gelbliches Öl mit einer Viskosität von 900 mPa·s bei 20°C und einem Amingehalt von 12.82 mmol N/g.
**Amin 6**: Gemäss der allgemeinen Herstellvorschrift für die reduktive Alkylierung wurden 21.2 g Benzaldehyd und 17.0 g IPDA umgesetzt. Erhalten wurde ein klares, leicht gelbliches Öl mit einer Viskosität von 590 mPa·s bei 20°C und einem Amingehalt von 5.8 mmol N/g.
**Amin 7:** Gemäss der allgemeinen Herstellvorschrift für die reduktive Alkylierung wurden 24.4 g Salicylaldehyd und 17,0 g IPDA umgesetzt. Erhalten wurde eine klare, gelbliche, hochviskose, bei Raumtemperatur glasartige Substanz mit einer Viskosität von 111'410 mPa·s bei 60°C und einem Amingehalt von 5.2 mol N/g.
**Amin 8:** Gemäss der allgemeinen Herstellvorschrift für die reduktive Alkylierung wurden 21.2 g Benzaldehyd und 13.6 g MXDA umgesetzt. Erhalten wurde ein klares, leicht gelbliches Öl mit einer Viskosität von 230 mPa·s bei 20°C und einem Amingehalt von 6.4 mmol N/g.
**Amin 9:** Gemäss der allgemeinen Herstellvorschrift für die reduktive Alkylierung wurden 24.4 g Salicylaldehyd und 13.6 g MXDA umgesetzt. Erhalten wurde ein klares, gelbliches Öl mit einer Viskosität von 800 mPa·s bei 60°C und einem Amingehalt von 5.4 mmol N/g.
**Amin 10:** Gemäss der allgemeinen Herstellvorschrift für die reduktive Alkylierung wurden 30.4 g Vanillin (= 4-Hydroxy-2-methoxybenzaldehyd) und 13,6 g MXDA umgesetzt. Erhalten wurde ein klares, oranges Öl mit einer Viskosität von 62'380 mPa·s bei 60°C und einem Amingehalt von 5.0 mmol N/g.
**Amin 11:** Gemäss der allgemeinen Herstellvorschrift für die reduktive Alkylierung wurden 21.2 g Benzaldehyd und 24.0 g Jeffamine^{®} D-230 umgesetzt. Erhalten wurde ein klares, leicht gelbliches Öl mit einer Viskosität von 450 mPa·s bei 20°C und einem Amingehalt von 4.7 mmol N/g.
**Amin 12:** Gemäss der allgemeinen Herstellvorschrift für die reduktive Alkylierung wurden 23.6 g Salicylaldehyd und 24.0 g Jeffamine^{®} D-230 umgesetzt. Erhalten wurde ein klares, gelbliches 01 mit einer Viskosität von 6'670 mPa·s bei 20°C und einem Amingehalt von 4.4 mmol N/g.
**Amin 13:** Gemäss der allgemeinen Herstellvorschrift für die reduktive Alkylierung wurden 23.6 g p-Hydroxybenzaldehyd und 24.0 g Jeffamine^{®} D-230 umgesetzt. Erhalten wurde ein klares, gelbliches Öl mit einer Viskosität von 60'100 mPa·s bei 20°C und einem Amingehalt von 3.7 mmol N/g.

| | Basis-Amin | Aldehyd | Viskosität [mPa·s] |
|---|---|---|---|
| Amin **1** | TETA | Benzaldehyd | 260 (20°C) |
| Amin **2** | TETA | Salicylaldehyd | 1'000 (60°C) |
| Amin **3** | TETA | p-Hydroxybenzaldehyd | 4'290 (60°C) |
| Amin **4** | TETA | 3-Hydroxypivalaldehyd | 930 (20°C) |
| Amin **5** | TETA | 2,2-Dimethyl-3-(N-morpholino)propanal | 900 (20°C) |
| Amin **6** | IPDA | Benzaldehyd | 590 (20°C) |
| Amin **7** | IPDA | Salicylaldehyd | 111'410 (60°C) |
| Amin **8** | MXDA | Benzaldehyd | 230 (20°C) |
| Amin **9** | MXDA | Salicylaldehyd | 800 (60°C) |
| Amin **10** | MXDA | Vanillin | 62'380 (60°C) |
| Amin **11** | D-230 | Benzaldehyd | 450 (20°C) |
| Amin **12** | D-230 | Salicylaldehyd | 6°670 (20°C) |
| Amin **13** | D-230 | p-Hydroxybenzaldehyd | 60°100 (20°C) |

| | | | |
|---|---|---|---|
| Tabelle 1: Viskositäten der Amine **1** bis **13**. | | | |

### 5. Herstellung von Härtern

**Beispiel 1**: 73.35 Gewichtsteile (GT) Amin **1** und 8.65 GT Amin **2** wurden mittels eines Zentrifugalmischers (SpeedMixer™ DAC 150, FlackTek Inc.) vermischt.
**Beispiel 2**: Gemäss der allgemeinen Herstellvorschrift für die reduktive Alkylierung wurden 15.28 g Benzaldehyd, 1.95 g Salicylaldehyd und 15.00 g TETA umgesetzt. Erhalten wurde ein klares, gelbliches Öl mit einer Viskosität von 300 mPa·s bei 20°C und einem Amingehalt von 12.11 mmol N/g. **Beispiel 3:** Wie in Beispiel 1 beschrieben wurden 65.20 GT Amin **1** und 17.90 GT Amin **2** vermischt.
**Beispiel 4:** Gemäss der allgemeinen Herstellvorschrift für die reduktive Alkylierung wurden 13.58 g Benzaldehyd, 3.91 g Salicylaldehyd und 15.00 g TETA umgesetzt. Erhalten wurde ein klares, gelbliches Öl mit einer Viskosität von 520 mPa·s bei 20°C und einem Amingehalt von 12.71 mmol N/g.
**Beispiel 5:** Wie in Beispiel 1 beschrieben wurden 57.05 GT Amin **1** und 26.86 GT Amin **2** vermischt.
**Beispiel 6:** Gemäss der allgemeinen Herstellvorschrift für die reduktive Alkylierung wurden 11.89 g Benzaldehyd, 5.86 g Salicylaldehyd und 15.00 g TETA umgesetzt. Erhalten wurde ein klares, gelbliches 01 mit einer Viskosität von 1'300 mPa·s bei 20°C und einem Amingehalt von 12.58 mmol N/g.
**Beispiel 7:** Wie in Beispiel 1 beschrieben wurden 40.80 GT Amin **1** und 44.80 GT Amin **2** vermischt.
**Beispiel 8:** Wie in Beispiel 1 beschrieben wurden 63.60 GT Amin **4** und 17.90 GT Amin **2** vermischt.
**Beispiel 9:** Wie in Beispiel 1 beschrieben wurden 91.40 GT Amin **5** und 17.90 GT Amin **2** vermischt.
**Beispiel 10:** Gemäss der allgemeinen Herstellvorschrift für die reduktive Alkylierung wurden 16.42 g Benzaldehyd, 2.10 g Salicylaldehyd und 15.00 g N4-Amin umgesetzt. Erhalten wurde ein klares, gelbliches Öl mit einer Viskosität von 300 mPa·s bei 20°C und einem Amingehalt von 10.52 mmol N/g.
**Beispiel 11:** Gemäss der allgemeinen Herstellvorschrift für die reduktive Alkylierung wurden 14.60 g Benzaldehyd, 4.20 g Salicylaldehyd und 15.00 g N4-Amin umgesetzt. Erhalten wurde ein klares, gelbliches Öl mit einer Viskosität von 530 mPa·s bei 20°C und einem Amingehalt von 11.23 mmol N/g.
**Beispiel 12:** Gemäss der allgemeinen Herstellvorschrift für die reduktive Alkylierung wurden 19.10 g Benzaldehyd, 2.40 g Salicylaldehyd und 17.03 g IPDA umgesetzt. Erhalten wurde ein klares, gelbliches Öl mit einer Viskosität von 1'710 mPa·s bei 20°C und einem Amingehalt von 5.77 mmol N/g.
**Beispiel 13:** Gemäss der allgemeinen Herstellvorschrift für die reduktive Alkylierung wurden 16.99 g Benzaldehyd, 4.88 g Salicylaldehyd und 17.03 g IPDA umgesetzt. Erhalten wurde ein klares, gelbliches Öl mit einer Viskosität von 5'310 mPa.s bei 20°C und einem Amingehalt von 5.57 mmol N/g.
**Beispiele 14:** Wie in Beispiel 1 beschrieben wurden 142.20 GT Amin **8** und 17.40 GT Amin **9** vermischt.
**Beispiel 15:** Gemäss der allgemeinen Herstellvorschrift für die reduktive Alkylierung wurden 19.10 g Benzaldehyd, 2,44 g Salicylaldehyd und 13.61 g MXDA umgesetzt. Erhalten wurde ein klares, gelbliches Öl mit einer Viskosität von 320 mPa·s bei 20°C und einem Amingehalt von 6.26 mol N/g.
**Beispiel 16:** Wie in Beispiel 1 beschrieben wurden 126.40 GTAmin **8** und 34.80 GT Amin **9** vermischt.
**Beispiel 17:** Gemäss der allgemeinen Herstellvorschrift für die reduktive Alkylierung wurden 16.99 g Benzaldehyd, 4.88 g Salicylaldehyd und 13.61g MXDA umgesetzt. Erhalten wurde ein klares, gelbliches Öl mit einer Viskosität von 550 mPa·s bei 20°C und einem Amingehalt von 6.12 mmol N/g.
**Beispiel 18:** Wie in Beispiele 1 beschrieben wurden 105.0 GT Amin **11** und 113.0 GT Amin **12** vermischt.
**Beispiel 19:** Gemäss der allgemeinen Herstellvorschrift für die reduktive Alkylierung wurden 5.30 g Benzaldehyd, 6.10 g Salicylaldehyd und 12.00 g Jeffamine^{®} D-230 umgesetzt. Erhalten wurde ein klares, gelbliches Öl mit einer Viskosität von 460 mPa·s bei 20°C und einem Amingehalt von 4.69 mmol N/g.

**Vergleichsbeispiel 20:** Wie in Beispiel 1 beschrieben wurden 105.0 GT Amin **11** und 113.0 GT Amin **13** vermischt.

**Tabelle 2: Viskositäten der Härter aus den Beispielen 1 bis 19 und des Vergleichsbeispiels 20.**

| | enthaltenes Amin der Formel (VIII) | Verhältnis **V1** | enthält ein Amin der Formel (V) | Viskosität (20°C) [Pa·s] |
|---|---|---|---|---|
| Härter Beispiel **1** | TETA | 0.11 | nein | 0.40 |
| Härter Beispiel **2** | TETA | 0.11 | ja | 0.30 |
| Härter Beispiel **3** | TETA | 0.25 | nein | 0.59 |
| Härter Beispiel **4** | TETA | 0.25 | ja | 0.50 |
| Härter Beispiel **5** | TETA | 0.43 | nein | 0.91 |
| Härter Beispiel **6** | TETA | 0.43 | ja | 0.85 |
| Härter Beispiel **7** | TETA | 1.0 | nein | 4.56 |
| Härter Beispiel **8** | TETA | 0.25 | nein | 2.68 |
| Härter Beispiel **9** | TETA | 0.25 | nein | 1.80 |
| Härter Beispiel **10** | N4-Amin | 0.11 | ja | 0.30 |
| Härter Beispiel **11** | N4-Amin | 0.25 | ja | 0.53 |
| Härter Beispiel **12** | IPDA | 0.11 | ja | 1.71 |
| Härter Beispiel **13** | IPDA | 0.25 | ja | 5.31 |
| Härter Beispiel **14** | MXDA | 0.11 | nein | 0.35 |
| Härter Beispiel **15** | MXDA | 0.11 | ja | 0.32 |
| Härter Beispiel **16** | MXDA | 0.25 | nein | 0.61 |
| Härter Beispiel **17** | MXDA | 0.25 | ja | 0.55 |
| Härter Beispiel **18** | D-230 | 1.0 | nein | 0.62 |
| Härter Beispiel **19** | D-230 | 1.0 | ja | 0.59 |
| Härter Vergl.bsp. **20** | D-230 | 1.0 | nein | 2.29 |

### 6. Herstellung von Epoxidharz-Zusammentungen

| verwendete Substanzen: | |
|---|---|
| Araldite^{®} GY 250 | Bisphenol-A-Diglycidylether; |
| (Huntsman) | Epoxid-Equivalentgewicht ca. 187.5g/Eq |
| Epikote^{®} 862 | Bisphenol-F-Diglycidylether; |
| (Hexion) | Epoxid-Equivalentgewicht ca. 169 g/Eq |
| Araldite^{®} DY-E | Monoglycidylether eines C₁₂- bis C₁₄-Alkohols; |
| (Huntsman) | Epoxid-Equivalentgewicht ca. 290 g/Eq |
| Ancamine^{®} K 54 | 2,4,6-Tris-(dimethylaminomethyl)phenol |
| (Air Products) | |

### Beispiele und Vergleichsbeispiele 21 bis 44

Für jedes Beispiel wurden die in den Tabellen 3 bis 5 angegebenen Inhaltsstoffe in den angegebenen Mengen (in Gewichtsteilen) mittels eines Zentrifugalmischers (SpeedMixer™ DAC 150, FlackTek Inc.) vermischt. 10 Minuten nach dem Vermischen wurde jeweils die Viskosität der Zusammensetzungen bestimmt ("Viskosität (10')"). Weiterhin wurde jeweils ein erster Film in einer Schichtdicke von 500 µm auf eine Glasplatte aufgezogen und dieser bei 23±1°C und 50±5 % relativer Feuchtigkeit (= Normklima, im folgenden abgekürzt mit "NK") gelagert, beziehungsweise ausgehärtet. Nach 4 Wochen wurde der Aspekt der Filme beurteilt (in den Tabellen mit "Aspekt (NK)" bezeichnet). Als "schön" wurde ein Film bezeichnet, welcher klar war und eine glänzende und nichtklebrige Oberfläche ohne Struktur aufwies. Als "Struktur" wird dabei jegliche Art von Zeichnung oder Muster auf der Oberfläche bezeichnet. Weiterhin wurde die Königshärte (Pendelhärte nach König, gemessen nach DIN EN ISO 1522) der Filme nach 2 Tagen Königshärte (NK) (2d)") bzw. nach 4 Tagen Königshärte (NK) (4d)") bzw. nach 7 Tagen Königshärte (NK) (7d)") bzw. nach 4 Wochen Königshärte (NK) (4w)") bestimmt. Weiterhin wurde jeweils ein zweiter Film in einer Schichtdicke von 500 µm auf eine Glasplatte aufgezogen und dieser unmittelbar nach dem Applizieren während 7 Tagen bei 8°C und 80 % relativer Feuchtigkeit und anschliessend während 3 Wochen im NK gelagert, beziehungsweise ausgehärtet. Anschliessend wurde der Aspekt dieser Filme beurteilt (in den Tabellen mit "Aspekt (8°/80%)" bezeichnet), auf die gleiche Weise wie für den Aspekt (N K) beschrieben. An den so ausgehärteten Filmen wurde ebenfalls die Königshärte bestimmt, jeweils nach 7 Tagen bei 8°C und 80 % relativer Feuchtigkeit ("Königsh. (8°/80%) (7d kalt)"), dann nach weiteren 4 Tagen im NK ("Königsh. (8°/80%) (+4d NK)") bzw. 7 Tagen im NK ("Königsh. (8°/80%) (+7d NK)") bzw. 3 Wochen im NK ("Königsh. (8°/80%) (+3w NK)").

Die Resultate sind in den Tabellen 3 bis 5 angegeben.

**Tabelle 3: Zusammensetzung und Eigenschaften der Beispiele 21 bis 23, 26 und der Vergleichsbeispiele 24, 25, 27 und 28. "Königsh." steht für "Königshärte", "Vgl." steht für "Vergleich"**

| **Beispiel** | | **21** | **22** | **23** | **24 (Vgl.)** | **25 (Vgl.)** | **26** | **27 (Vgl.)** | **28 (Vgl.)** |
|---|---|---|---|---|---|---|---|---|---|
| Araldite^{®} GY-250 | | 111.0 | 111.0 | 111.0 | 111.0 | 111.0 | 167.2 | 167.2 | 167.2 |
| Epikote^{®} 862 | | 50.2 | 50.2 | 50.2 | 50.2 | 50.2 | - | - | - |
| Araldite^{®} DY-E | | 31.8 | 31.8 | 31.8 | 31.8 | 31.8 | 31.8 | 31.8 | 31.8 |
| Härter Beispiel **2** | | 82.4 | - | - | - | - | - | - | - |
| Härter Beispiel **3** | | - | - | - | - | - | 83.2 | - | - |
| Härter Beispiel **4** | | - | 83.2 | - | - | - | - | - | - |
| Härter Beispiel **6** | | - | - | 84.0 | - | - | - | - | |
| Amin **1** | | - | - | - | 81.6 | - | - | 81.6 | - |
| Amin **2** | | - | - | - | - | 89.6 | - | - | 89.6 |
| Ancamine^{®} K 54 | | 5.5 | 5.5 | 5.5 | 5.5 | 5.6 | 5.5 | 5.6 | 5.8 |
| | | | | | | | | | |
| Visk. (10') [Pa·s] | | 0.40 | 0.46 | 0.66 | 0.37 | 2.59 | 0.90 | 0.49 | 5.36 |
| Königsh. [s] | (2d) | 104 | 151 | 157 | 60 | 192 | 143 | 126 | 173 |
| | (4d) | 120 | 168 | 174 | 112 | 202 | 175 | 161 | 188 |
| (NK) | (7d) | 155 | 174 | 181 | 145 | 207 | 176 | 176 | 217 |
| | (4w) | 174 | 180 | 188 | 165 | 207 | 187 | 193 | 218 |
| Aspekt (NK) | | schön | schön | schön | schön | schön | schön | schön | schön |
| Königsh. | (7d kalt) | 74 | 101 | 104 | 21 | 147 | 112 | 95 | 148 |
| [s] | (+4d NK) | 153 | 165 | 172 | 82 | 189 | 153 | 145 | 203 |
| (8°/80%) | (+7dNK) | 168 | 188 | 188 | 105 | 195 | 188 | 154 | 209 |
| | (+3w NK) | 172 | 192 | 196 | 168 | 205 | 190 | 184 | 196 |
| Aspekt (8°/80%) | | schön | schön | schön | schön | schön | schön | schön | schön |

**Tabelle 4: Zusammensetzung und Eigenschaften der Beispiele 29 bis 31, 33 und 34 und der Vergleichsbeispiele 32 und 35. "n.m." steht für "nicht messbar" (klebrig), "Vgl." steht für "Vergleich"**

| **Beispiel** | | **29** | **30** | **31** | **32 (Vgl.)** | **33** | **34** | **35 (Vgl.)** |
|---|---|---|---|---|---|---|---|---|
| Araldite^{®} GY-250 | | 167.2 | 167.2 | 167.2 | 167.2 | 167.2 | 167.2 | 167.2 |
| Araldite^{®} DY-E | | 31.8 | 31.8 | 31.8 | 31.8 | 31.8 | 31.8 | 31.8 |
| Härter Beispiel **10** | | 89.2 | - | - | - | - | - | - |
| Härter Beispiel **11** | | - | 89.8 | - | - | - | - | - |
| Härter Beispiel **12** | | - | - | 178.5 | - | - | - | - |
| Härter Beispiel **15** | | - | - | - | - | 159.4 | - | - |
| Härter Beispiel **17** | | - | - | - | - | - | 160.6 | - |
| Amin **6** | | - | - | - | 175.3 | - | - | - |
| Amin **7** | | | - | - | | - | - | 158.2 |
| Ancamine^{®} K 54 | | 5.8 | 5.8 | 7.6 | 7.5) | 7.2 | 7.2 | 7.1 |
| | | | | | | | | |
| Visk. (10')[Pa·s] | | 0.56 | 0.67 | 1.39 | 1.0 | 0.48 | 0.53 | 0.34 |
| Königshärte [s] | (2d) | 148 | 155 | n.m. | n.m. | 67 | 104 | 27 |
| | (4d) | 181 | 182 | 69 | n.m. | 125 | 154 | 108 |
| (NK) | (7d) | 195 | 196 | 141 | 62 | 147 | 165 | 146 |
| | (4w) | 209 | 209 | 206 | 139 | 169 | 189 | 154 |
| Aspekt (NK) | | schön | schön | schön | schön | schön | schön | schön |
| Königshärte | (7d kalt) | 108 | 111 | 18 | n.m. | 60 | 77 | 6 |
| [s] | (+4d NK) | 160 | 176 | 129 | 87 | 134 | 159 | 78 |
| (8°/80%) | (+7d NK) | 176 | 183 | 162 | 126 | 161 | 161 | 161 |
| | (+3w NK) | 181 | 186 | 193 | 165 | 169 | 175 | 169 |
| Aspekt (8°/80%) | | schön | schön | schön | schön | schön | schön | schön |

**Tabelle 5: Zusammensetzung und Eigenschaften der Beispiele 36, 37, 41 und 43 und der Vergleichsbeispiele 38 bis 40, 42 und 44. "n.b." steht für "nicht bestimmt", "Königsh." steht für "Königshärte", "Vgl." steht für "Vergleich"**

| **Beispiel** | | **36** | **37** | **38 (Vgl.)** | **39 (VgL)** | **40 (Vgl.)** | **41** | **42 (Vgl.)** | **43** | **44 (Vgl.)** |
|---|---|---|---|---|---|---|---|---|---|---|
| Araldite^{®} GY-250 | | 167.2 | 167.2 | 167.2 | 167.2 | 167.2 | | 167.2_{.}167.2 | 167.2 | 167.2 |
| Araldite^{®} DY-E | | 31.8 | 31.8 | 31.8 | 31.8 | 31.8 | 31.8 | 31.8 | 31.8 | 31.8 |
| IPDA | | 28.3 | 28.3 | 28.3 | 28.3 | 28.3 | - | - | - | - |
| Härter Beispiel **18** | | 72.7 | - | - | - | - | - | - | - | - |
| Härter Beispiel **19** | | - | 72.7 | - | - | - | - | - | - | - |
| Amin **11** | | - | - | 70.0 | - | - | - | - | - | - |
| Amin **12** | | - | - | - | 75.3 | - | - | - | - | - |
| Amin **13** | | - | - | - | - | 75.3 | - | - | - | - |
| Härter Beispiel **8** | | - | - | - | - | - | 81.5 | - | - | - |
| **Amin 4** | | - | - | - | - | - | - | 79.6 | - | - |
| Härter Beispiel **9** | | - | - | - | - | - | - | - | 109.3 | |
| Amin **5** | | - | - | - | - | - | - | - | | 114.3 |
| Ancamine^{®} K 54 | | 6.0 | 6.0 | 6.0 | 6.0 | 6.0 | 5.6 | 5.6 | 6.0 | 6.3 |
| | | | | | | | | | | |
| Visk. (10') [Pa·s] | | 0.75 | 0.62 | 0.47 | 1.65 | 5.15 | 1.85 | 1.34 | 1.65 | 1.28 |
| Königsh. [s] | (2d) | 40 | 52 | n.b. | 127 | 123 | 126 | 99 | 39 | 17 |
| | (4d) | 128 | 152 | 102 | 160 | 162 | 176 | 167 | 39 | 56 |
| (NK) | (7d) | 170 | 193 | 129 | 192 | 182 | 195 | 189 | 133 | 92 |
| | (4w) | 193 | 202 | 161 | 200 | 190 | 212 | 203 | 165 | 140 |
| Aspekt (NK) | | schön | schön | schön | schön | schön: | schön | schön | schön | schön |

## Patentansprüche

1. Härter, geeignet zum Aushärten von Epoxidharzen, enthaltend ein Amin mit mindestens einer Aminogruppe der Formel (I) und ein Amin mit mindestens einer Aminogruppe der Formel (II), 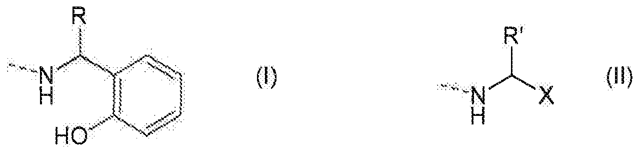 wobei
Rind R' unabhängig voneinander für ein Wasserstoffatom oder eine Alkylgruppe mit 1 bis 12 C-Atomen stehen; und
X für einen Kohlenwasserstoffrest mit 1 bis 20 C-Atomen, welcher gegebenenfalls Hydroxylgruppen, Ethergruppen, Estergruppen oder Aminogruppen aufweist, steht;
und wobei das Verhältnis zwischen der Anzahl Aminogruppen der Formel (I) und der Anzahl Aminogruppen der Formel (II) im Härter einen Wert von 0.05 bis 1.0 aufweist.

2. Härter gemäss Anspruch 1, **dadurch gekennzeichnet, dass** das Verhältnis zwischen der Anzahl Aminogruppen der Formel (I) und der Anzahl Aminogruppen der Formel (II) einen Wert von 0.08 bis 0.7 aufweist,

3. Härter gemäss einem der Ansprüche 1 oder 2, **dadurch gekennzeichnet, dass** Rind R' unabhängig voneinander für ein Wasserstoffatom oder eine Methylgruppe stehen.

4. Härter gemäss einem der Ansprüche 1 bis 3, **dadurch gekennzeichnet, dass** X für einen Kohlenwasserstoffrest mit 1 bis 12 C-Atomen, welcher gegebenenfalls Hydroxygruppen, Ethergruppen oder Aminogruppen aufweist, steht.

5. Härter gemäss Anspruch 4, **dadurch gekennzeichnet, dass** der Kohlenwasserstoffrest für einen gegebenenfalls substituierten Arylrest mit 5 bis 12 C-Atomen steht.

6. Härter gemäss einem der Ansprüche 1 bis 3, **dadurch gekennzeichnet, dass** X für einen Rest der Formel (III) steht, 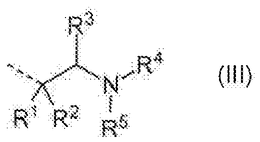 wobei
R¹ und R² entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen;
R³ für Wasserstoff oder eine Alkylgruppe oder eine Arylalkylgruppe oder eine Alkoxycarbonylgruppe mit 1 bis 12 C-Atomen steht;
und entweder
R⁴ für einen einwertigen aliphatischen, cycloaliphatischen oder arylaliphatischen Rest mit 1 bis 20 C-Atomen, welcher gegebenenfalls Heteroatome enthält, steht, und
R⁵ für Wasserstoff oder für einen einwertigen aliphatischen, cycloaliphatischen oder arylaliphatischen Rest mit 1 bis 20 C-Atomen, welcher gegebenenfalls Heteroatome enthält,steht,
oder
R⁴ und R⁵ zusammen für einen zweiwertigen aliphatischen Rest mit 3 bis 30 C-Atomen, der Teil eines, gegebenenfalls substituierten, heterocyclischen Rings mit 5 bis 8, bevorzugt 6, Ringatomen ist, wobei dieser Ring neben dem Stickstoffatom gegebenenfalls weitere Heteroatome enthält, stehen.

7. Härter gemäss einem der Ansprüche 1 bis 3, **dadurch gekennzeichnet, dass** Für einen Rest der Formel (IV) steht, 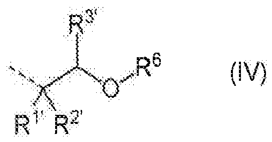 wobei
R^{1'} und R^{2'} entweder
unabhängig voneinander jeweils für einen einwertigen Kohlenwasserstoffrest mit 1 bis 12 C-Atomen stehen,
oder zusammen für einen zweiwertigen Kohlenwasserstoffrest mit 4 bis 12 C-Atomen, der Teil eines, gegebenenfalls substituierten, carbocyclischen Rings mit 5 bis 8, bevorzugt 6, C-Atomen ist, stehen;
R^{3'} für Wasserstoff oder eine Alkylgruppe oder eine Arylalkylgruppe oder eine Alkoxycarbonylgruppe mit 1 bits 12 C-Atomen steht; und
R⁶ für Wasserstoff oder für einen Alkyl- oder Acylrest mit 1 bis 20 C-Atomen steht, insbesondere für Wasserstoff oder für einen Acylrest mit 1 bis 12 C-Atomen.

8. Härter gemäss einem der Ansprüche 1 bis 7, **dadurch gekennzeichnet, dass** er mindestens ein Amin der Formel (V) enthält, 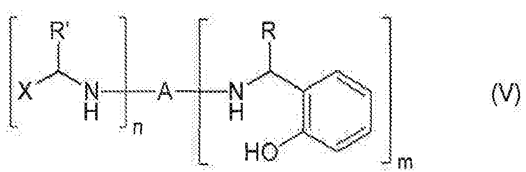 wobei
A für einen (m+n)-wertigen Kohlenwasserstoffrest mit einem Molekulargewicht im Bereich von 28 bis 5000 g/mol, welcher gegebenenfalls Ethergruppen oder Aminogruppen aufweist, steht; und
m und n jeweils für 1 oder 2 stehen.

9. Härter gemäss Anspruch 8, **dadurch gekennzeichnet, dass** A für den Rest eines Amins nach Entfernung der primären Aminogruppen steht, wobei das Amin ausgewählt ist aus der Gruppe bestehend aus 1,5-Diamino-2-methylpenten, 2-Butyl-2-ethyl-1,5-pentandiamin, 1,6-Hexandiamin, 2,5-Dimethyl-1,6-hexandiamin, 2,2,4- und 2,4,4-Trimethylhexamethylendiamin, 1,12-Dodecandiamin, 1,4-Diaminocyclohexan, Bis-(4-aminocyclohexyl)methan, Bis-(4-amino-3-methylcyclohexyl)methan, 1-Amino-3-aminomethyl-3,5,5-trimethylcydohexan, 1,3-Bis-(aminomethyl)cyclohexan, 2,5- und 2,6-Bis-(aminomethyl)bicyclio[2.2.1]heptan, 3(4),8(9)-Bis-(aminomethyl)-tricyclo[5.2.10^{2,6}]decan, 1,3-Bis-(aminomethyl)benzol, Bis-hexamethylentriamin, Diethylentriamin, Triethylentetramin, Tetraethylenpentamin, Pentaethylenhexamin, Polyethylenpolyamin mit 5 bis 7 Ethylenamin-Einheiten, Dipropylentriamin, N-(2-Aminoethyl)-1,3-propandiamin, N,N'-Bis-(3-aminopropyl)ethylendiamin und Polyoxyalkylen-Diamine und Polyoxyalkylen-Triamine mit einem Molekulargewicht von 200 bis 500 g/mol

10. Härter gemäss einem der Ansprüche 1 bis 9, **dadurch gekennzeichnet**, er eine Viskosität, gemessen bei 20°C, im Bereich von 150 bis 2000 mPa·s aufweist.

11. Epoxidharz-Zusammensetzung enthaltend
a) mindestens ein Epoxidharz, und
b) mindestens einen Härter gemäss einem der Ansprüche 1 bis 10.

12. Epoxidharz-Zusammensetzung gemäss Anspruch 11, **dadurch gekennzeichnet, dass** sie eine zweikomponentige Zusammensetzung ist, bestehend aus
(i) einer Harz-Komponente enthaltend mindestens ein Epoxidharz und
(ii) einer Härter-Komponente enthaltend den Härter gemäss einem der Ansprüche 1 bis 10.

13. Ausgehärtete Zusammensetzung erhalten aus der Aushärtung der Epoxiaharz-Zusammensetzung gemäss einem der Ansprüche 11 und 12.

14. Verwendung der Epoxidharz-Zusammensetzung gemäss einem der Ansprüche 11 und 12 als Beschichtung.

15. Artikel erhalten aus der Verwendung gemäss Anspruch 14.
